# EUROPEAN PATENT APPLICATION

(11) **EP 4 354 348 A1**
(43) Date of publication of application: **17.04.2024**
(21) Application number: 23190370.9
(22) Date of filing: 08.08.2023
(51) Int. Cl.: G06N 3/0495, G06N 3/063, G06N 3/0464

(54) **SPARSITY PROCESSING ON UNPACKED DATA**

(30) Priority: 19.09.2022 US 202217947642
(71) Applicant: Intel Corporation, Santa Clara, CA 95054 (US)
(72) Inventor: POWER, Martin, Dublin, D20 V024 (IE); BYRNE, Conor, Dublin, D18 WN84 (IE); HANRAHAN, Niall, Galway, H91 N6K7 (IE); MATHAIKUTTY, Deepak Abraham, Chandler, 85224 (US); RAHA, Arnab, San Jose, 95136 (US); SUNG, Raymond Jit-Hung, San Francisco, 94158 (US); BERNARD, David Thomas, Kilcullen, R56 E160 (IE); BRADY, Kevin, Newry, BT34 2GB (GB); GRYMEL, Martin-Thomas, Leixlip, W23 VP97 (IE)
(74) Representative: Rummler, Felix

(57) **Abstract**

Sparsity processing within a compute block can be done on unpacked data. The compute block includes a sparsity decoder that generates a combined sparsity vector from an activation sparsity vector and a weight sparsity vector. The activation sparsity vector indicates positions of non-zero valued activations in an activation context. The weight sparsity vector indicates positions of non-zero valued weights in a weight context. The combined sparsity vector comprises one or more zero valued bits and one or more non-zero valued bits. The sparsity decoder may determine the position of a non-zero valued bit in the combined sparsity vector and determine an address for the non-zero valued activation and the non-zero valued weight based on the position of the non-zero valued bit. The non-zero valued activation and the non-zero valued weight may be provided to a PE for performing MAC operations.

## Description

### Technical Field

This disclosure relates generally to neural networks, and more specifically, to sparsity processing on unpacked data.

### Background

Deep neural networks (DNNs) are used extensively for a variety of artificial intelligence applications ranging from computer vision to speech recognition and natural language processing due to their ability to achieve high accuracy. However, the high accuracy comes at the expense of significant computation cost. DNNs have extremely high computing demands as each inference can require hundreds of millions of MAC (multiply-accumulate) operations as well as hundreds of millions of weight operand weights to be stored for classification or detection. Therefore, techniques to improve efficiency of DNNs are needed.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates an example DNN, in accordance with various embodiments.
FIG. 2 illustrates an example convolution, in accordance with various embodiments.
FIG. 3 illustrates a block diagram of a DNN accelerator, in accordance with various embodiments.
FIG. 4 illustrates a block diagram of a compute block, in accordance with various embodiments.
FIG. 5 illustrates a block diagram of a sparsity decoder, in accordance with various embodiments.
FIG. 6 illustrates a processing element (PE) array, in accordance with various embodiments.
FIG. 7 illustrates a PE coupled to register files and a sparsity decoder, in accordance with various embodiments.
FIG. 8 illustrates a multi-input PE, in accordance with various embodiments.
FIGS. 9A-9C illustrate unpacking data, in accordance with various embodiments.
FIGS. 10A and 10B illustrate processing sparsity of unpacked data, in accordance with various embodiments.
FIG. 11 illustrates narrowed sparsity processing, in accordance with various embodiments.
FIG. 12 is a flowchart showing a method of deep learning, in accordance with various embodiments.
FIG. 13 illustrates a deep learning environment, in accordance with various embodiments.
FIG. 14 is a block diagram of an example DNN system, in accordance with various embodiments.
FIG. 15 is a block diagram of an example computing device, in accordance with various embodiments.

### Detailed Description

### Overview

The last decade has witnessed a rapid rise in Al (artificial intelligence) based data processing, particularly based on DNN. DNNs are widely used in the domains of computer vision, speech recognition, image, and video processing mainly due to their ability to achieve beyond human-level accuracy. The significant improvements in DNN model size and accuracy coupled with the rapid increase in computing power of execution platforms have led to the adoption of DNN applications even within resource constrained mobile and edge devices that have limited energy availability.

DNN models are usually run by DNN accelerators. The performance of a DNN accelerator may be measured by Tera Operations Per Second (TOPs), which can be calculated by multiplying the compute clock frequency by the number of PEs by two operations (TOPS = frequency * number of PEs * 2 operations). PEs are units that perform MAC operations. A common method to boost performance is to increase the number of inputs to an individual PE from a single input (i.e., one pair of activation and weight values to be multiplied and accumulated) to multiple inputs (i.e., multiple pairs of activation and weight values to be multiplied and accumulated in parallel). For example, moving from a single input PE to an 8-input PE will deliver an 8x increase in available TOPs.

However, for sparse DNNs, increasing the number of PE inputs increases complexity in the sparsity decoder that processes sparsity of activations and weights, as the sparsity decoder needs to find multiple pairs of non-sparse activations and weights per compute cycle instead of a single pair of non-sparse activation and weights. The sparsity processing operation usually consumes a significant portion of power used within DNN accelerators. The increased complexity can result in less power and area efficiency.

Embodiments of the present disclosure may improve on at least some of the challenges and issues described above by providing a system and method of sparsity processing on unpacked data. In various embodiments of the present disclosure, a compute block may include sparsity decoders that runs sparsity processing on unpacked data, such as unpacked activation contexts and weight contexts. An activation context may be a portion of an input tensor of a convolution. The activation context may include a sequence of activations, each of which corresponds to a different channel in the input tensor. One or more activations may have values of zero and are referred to as sparse activations or zero valued activations. An activation having a non-zero value is referred to as a dense activation, non-sparse activation, or non-zero valued activation. The weight context may be a portion of a filter and include a sequence of weights, each of which corresponds to a different channel in the filter.

An activation may have a matching position as a weight. For instance, the position of the activation in the activation context is the same as the position of the weight in the weight context. The activation and weight may correspond to the same channel and constitute a single input to a PE. The activation context and weight context may be stored as packed data in a memory, e.g., a memory external to the compute block. As packed data, sparse activations or sparse weights are not saved. The non-sparse activations (or weights) are stored at consecutive addresses. The number of the consecutive address is smaller than the number of activations (or weights) in the activation context (or the weight context).

A read module may unpack the packed data before making the data available for the compute block. Through the unpacking, the non-sparse activations (or weights) are stored at inconsecutive addresses in a sequence of addresses. One or more addresses in the sequence correspond to sparse activations (or weights) but may be empty and store no data. The unpacked data may be transmitted to the compute block, in which the sparsity decoder can perform sparsity processing.

The sparsity decoder may generate a combined sparsity vector based on a sparsity vector of the activation context ("activation sparsity vector") and a sparsity vector of the weight context ("weight sparsity vector"). The sparsity decoder may perform one-hot operation on the combined sparsity vector to produce a one-hot vector that includes a single one valued bit and a plurality of zero valued bits. The one-hot vector may indicate a position of a one valued bit in the combined sparsity vector. The sparsity decoder may map the position to an address for the corresponding activation and weight so that the activation can be written to the address in a memory inside the compute block and the weight can be written to the same address in another memory inside the compute block.

As the non-sparse activations and non-sparse weights are unpacked before they reach the compute block, the sparsity decoder can use the combined sparsity vector to generate addresses for the non-sparse activations and non-sparse weights. Also, the sparsity decoder may generate one address which applies to both the non-sparse activation and the non-sparse weight in a single PE input. Further, the output generated from PE input may be independent/unpacked from other outputs generated from other PE inputs, which can enable narrowed sparsity processing, i.e., a subset of the combined sparsity vector (as opposed to the whole combined sparsity vector) is processed to determine the position of a one valued bit. Therefore, the operations performed by the sparsity decoder are simpler compared with currently available sparse decoders that process sparsity on packed data. The power and area efficiency of the sparsity decoder in the present invention can be better.

For purposes of explanation, specific numbers, materials and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or DNN accelerator that comprises a list of elements is not necessarily limited to only those elements but may include other elements not expressly listed or inherent to such method, process, device, or DNN accelerators. Also, the term "or" refers to an inclusive "or" and not to an exclusive "or."

The DNN systems, methods and devices of this disclosure each have several innovative aspects, no single one of which is solely responsible for all desirable attributes disclosed herein. Details of one or more implementations of the subject matter described in this specification are set forth in the description below and the accompanying drawings.

### Example DNN

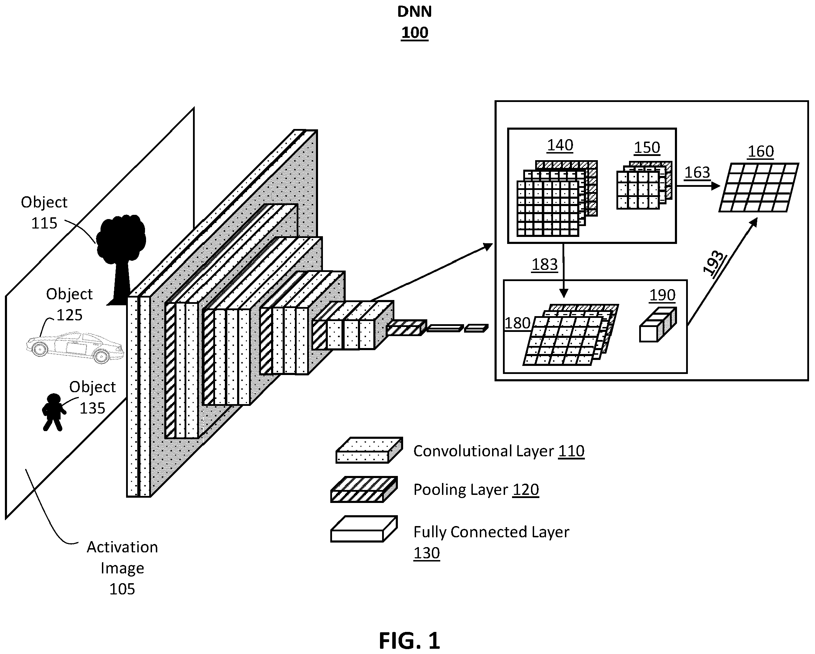

FIG. 1 illustrates an example DNN 100, in accordance with various embodiments. For purpose of illustration, the DNN 100 in FIG. 1 is a convolutional neural network (CNN). In other embodiments, the DNN 100 may be other types of DNNs. The DNN 100 is trained to receive images and output classifications of objects in the images. In the embodiments of FIG. 1, the DNN 100 receives an input image 105 that includes objects 115, 125, and 135. The DNN 100 includes a sequence of layers comprising a plurality of convolutional layers 110 (individually referred to as "convolutional layer 110"), a plurality of pooling layers 120 (individually referred to as "pooling layer 120"), and a plurality of fully connected layers 130 (individually referred to as "fully connected layer 130"). In other embodiments, the DNN 100 may include fewer, more, or different layers. In an inference of the DNN 100, the layers of the DNN 100 execute tensor computation that includes many tensor operations, such as convolution (e.g., multiply-accumulate (MAC) operations, etc.), pooling operations, elementwise operations (e.g., elementwise addition, elementwise multiplication, etc.), other types of tensor operations, or some combination thereof.

The convolutional layers 110 summarize the presence of features in the input image 105. The convolutional layers 110 function as feature extractors. The first layer of the DNN 100 is a convolutional layer 110. In an example, a convolutional layer 110 performs a convolution on an input tensor 140 (also referred to as input feature map (IFM) 140) and a filter 150. As shown in FIG. 1, the IFM 140 is represented by a 7×7×3 three-dimensional (3D) matrix. The IFM 140 includes 3 input channels, each of which is represented by a 7×7 two-dimensional (2D) array. The 7×7 2D array includes 7 input elements (also referred to as input points) in each row and 7 input elements in each column. The filter 150 is represented by a 3×3×3 3D matrix. The filter 150 includes 3 kernels, each of which may correspond to a different input channel of the IFM 140. A kernel a 2D array of weights, where the weights are arranged in columns and rows. A kernel can be smaller than the IFM. In the embodiments of FIG. 1, each kernel is represented by a 3×3 2D array. The 3×3 kernel includes 3 weights in each row and 3 weights in each column. Weights can be initialized and updated by backpropagation using gradient descent. The magnitudes of the weights can indicate importance of the filter 150 in extracting features from the IFM 140.

The convolution includes MAC operations with the input elements in the IFM 140 and the weights in the filter 150. The convolution may be a standard convolution 163 or a depthwise convolution 183. In the standard convolution 163, the whole filter 150 slides across the IFM 140. All the input channels are combined to produce an output tensor 160 (also referred to as output feature map (OFM) 160). The OFM 160 is represented by a 5×5 2D array. The 5×5 2D array includes 5 output elements (also referred to as output points) in each row and 5 output elements in each column. For purpose of illustration, the standard convolution includes one filter in the embodiments of FIG. 1. In embodiments where there are multiple filters, the standard convolution may produce multiple output channels in the OFM 160.

The multiplication applied between a kernel-sized patch of the IFM 140 and a kernel may be a dot product. A dot product is the elementwise multiplication between the kernel-sized patch of the IFM 140 and the corresponding kernel, which is then summed, always resulting in a single value. Because it results in a single value, the operation is often referred to as the "scalar product." Using a kernel smaller than the IFM 140 is intentional as it allows the same kernel (set of weights) to be multiplied by the IFM 140 multiple times at different points on the IFM 140. Specifically, the kernel is applied systematically to each overlapping part or kernel-sized patch of the IFM 140, left to right, top to bottom. The result from multiplying the kernel with the IFM 140 one time is a single value. As the kernel is applied multiple times to the IFM 140, the multiplication result is a 2D array of output elements. As such, the 2D output array (i.e., the OFM 160) from the standard convolution 163 is referred to an OFM.

In the depthwise convolution 183, the input channels are not combined. Rather, MAC operations are performed on an individual input channel and an individual kernel and produce an output channel. As shown in FIG. 1, the depthwise convolution 183 produces a depthwise output tensor 180. The depthwise output tensor 180 is represented by a 5×5×3 3D matrix. The depthwise output tensor 180 includes 3 output channels, each of which is represented by a 5×5 2D array. The 5×5 2D array includes 5 output elements in each row and 5 output elements in each column. Each output channel is a result of MAC operations of an input channel of the IFM 140 and a kernel of the filter 150. For instance, the first output channel (patterned with dots) is a result of MAC operations of the first input channel (patterned with dots) and the first kernel (patterned with dots), the second output channel (patterned with horizontal strips) is a result of MAC operations of the second input channel (patterned with horizontal strips) and the second kernel (patterned with horizontal strips), and the third output channel (patterned with diagonal stripes) is a result of MAC operations of the third input channel (patterned with diagonal stripes) and the third kernel (patterned with diagonal stripes). In such a depthwise convolution, the number of input channels equals the number of output channels, and each output channel corresponds to a different input channel. The input channels and output channels are referred to collectively as depthwise channels. After the depthwise convolution, a pointwise convolution 193 is then performed on the depthwise output tensor 180 and a 1×1×3 tensor 190 to produce the OFM 160.

The OFM 160 is then passed to the next layer in the sequence. In some embodiments, the OFM 160 is passed through an activation function. An example activation function is the rectified linear activation function (ReLU). ReLU is a calculation that returns the value provided as input directly, or the value zero if the input is zero or less. The convolutional layer 110 may receive several images as input and calculates the convolution of each of them with each of the kernels. This process can be repeated several times. For instance, the OFM 160 is passed to the subsequent convolutional layer 110 (i.e., the convolutional layer 110 following the convolutional layer 110 generating the OFM 160 in the sequence). The subsequent convolutional layers 110 performs a convolution on the OFM 160 with new kernels and generates a new feature map. The new feature map may also be normalized and resized. The new feature map can be kernelled again by a further subsequent convolutional layer 110, and so on.

In some embodiments, a convolutional layer 110 has 4 hyperparameters: the number of kernels, the size F kernels (e.g., a kernel is of dimensions F×F×D pixels), the S step with which the window corresponding to the kernel is dragged on the image (e.g., a step of one means moving the window one pixel at a time), and the zero-padding P (e.g., adding a black contour of P pixels thickness to the input image of the convolutional layer 110). The convolutional layers 110 may perform various types of convolutions, such as 2-dimensional convolution, dilated or atrous convolution, spatial separable convolution, depthwise separable convolution, transposed convolution, and so on. The DNN 100 includes 16 convolutional layers 110. In other embodiments, the DNN 100 may include a different number of convolutional layers.

The pooling layers 120 down-sample feature maps generated by the convolutional layers, e.g., by summarizing the presents of features in the patches of the feature maps. A pooling layer 120 is placed between 2 convolution layers 110: a preceding convolutional layer 110 (the convolution layer 110 preceding the pooling layer 120 in the sequence of layers) and a subsequent convolutional layer 110 (the convolution layer 110 subsequent to the pooling layer 120 in the sequence of layers). In some embodiments, a pooling layer 120 is added after a convolutional layer 110, e.g., after an activation function (e.g., ReLU) has been applied to the OFM 160.

A pooling layer 120 receives feature maps generated by the preceding convolution layer 110 and applies a pooling operation to the feature maps. The pooling operation reduces the size of the feature maps while preserving their important characteristics. Accordingly, the pooling operation improves the efficiency of the DNN and avoids over-learning. The pooling layers 120 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is 2×2 pixels applied with a stride of 2 pixels, so that the pooling operation reduces the size of a feature map by a factor of 2, e.g., the number of pixels or values in the feature map is reduced to one quarter the size. In an example, a pooling layer 120 applied to a feature map of 6×6 results in an output pooled feature map of 3×3. The output of the pooling layer 120 is inputted into the subsequent convolution layer 110 for further feature extraction. In some embodiments, the pooling layer 120 operates upon each feature map separately to create a new set of the same number of pooled feature maps.

The fully connected layers 130 are the last layers of the DNN. The fully connected layers 130 may be convolutional or not. The fully connected layers 130 receives an input operand. The input operand defines the output of the convolutional layers 110 and pooling layers 120 and includes the values of the last feature map generated by the last pooling layer 120 in the sequence. The fully connected layers 130 applies a linear combination and an activation function to the input operand and generates an individual partial sum. The individual partial sum may contain as many elements as there are classes: element i represents the probability that the image belongs to class i. Each element is therefore between 0 and 1, and the sum of all is worth one. These probabilities are calculated by the last fully connected layer 130 by using a logistic function (binary classification) or a softmax function (multi-class classification) as an activation function.

In some embodiments, the fully connected layers 130 classify the input image 105 and returns an operand of size N, where N is the number of classes in the image classification problem. In the embodiments of FIG. 1, N equals 3, as there are 3 objects 115, 125, and 135 in the input image. Each element of the operand indicates the probability for the input image 105 to belong to a class. To calculate the probabilities, the fully connected layers 130 multiply each input element by weight, makes the sum, and then applies an activation function (e.g., logistic if N=2, softmax if N>2). This is equivalent to multiplying the input operand by the matrix containing the weights. In an example, the individual partial sum includes 3 probabilities: a first probability indicating the object 115 being a tree, a second probability indicating the object 125 being a car, and a third probability indicating the object 135 being a person. In other embodiments where the input image 105 includes different objects or a different number of objects, the individual partial sum can be different.

### Example Convolution

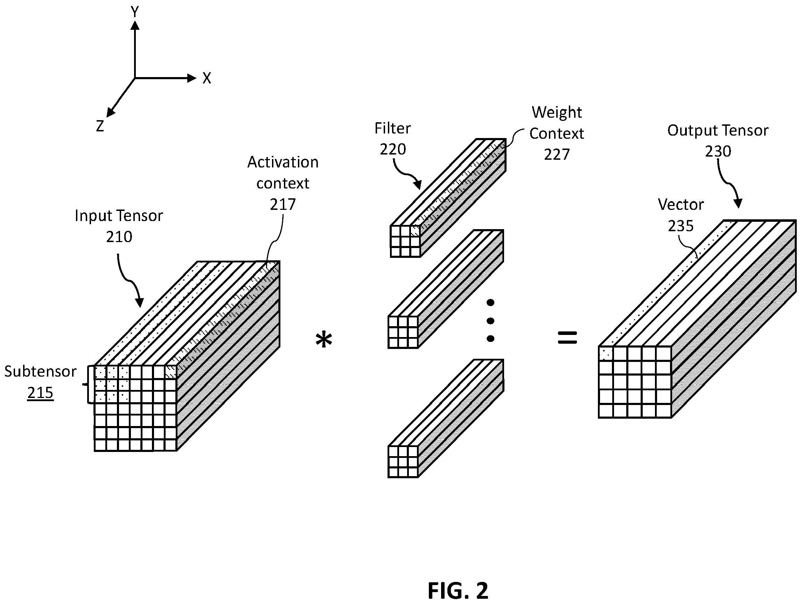

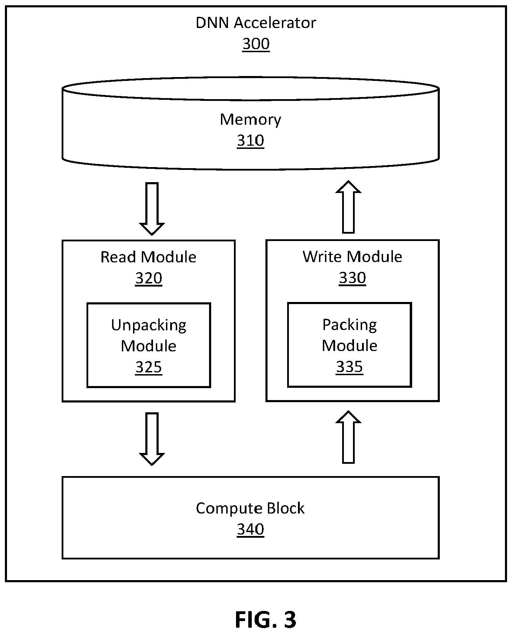

FIG. 2 illustrates an example convolution, in accordance with various embodiments. The convolution may be a convolution in a convolutional layer of a DNN, e.g., a convolutional layer 110 in FIG. 1. The convolution can be executed on an input tensor 210 and filters 220 (individually referred to as "filter 210"). A result of the convolution is an output tensor 230. In some embodiments, the convolution is performed by a compute block, such as the compute block 340 in FIG. 3.

In the embodiments of FIG. 2, the input tensor 210 includes activations (also referred to as "input activations," "input elements," or "elements") arranged in a 3D matrix. Each input activation may be represented by a (X, Y, Z) coordinate that indicates a position of the activation in the 3D matrix. The input tensor 210 has a spatial size *Hᵢₙ* × *Wᵢₙ* × *Cᵢₙ*, where *Hᵢₙ* is the height of the 3D matrix (i.e., the length along the Y-axis, which indicates the number of activations in a column in the 2D array of each input channel), *Wᵢₙ* is the width of the 3D matrix (i.e., the length along the X-axis, which indicates the number of activations in a row in the 2D array of each input channel), and *Cᵢₙ* is the depth of the 3D matrix (i.e., the length along the Z axis, which indicates the number of input channels). For purpose of simplicity and illustration, the input tensor 210 has a spatial size of 7×7×*Cᵢₙ*, i.e., the 2D array each input channel has a 7×7 2D array.

Each filter 220 includes weights arranged in a 3D matrix. The values of the weights may be determined through training the DNN. A filter 220 has a spatial size *H_{f}* × *W_{f}* × *C_{f}*, where *H_{f}* is the height of the filter (i.e., the length along the Y-axis, which indicates the number of weight in a column in each kernel), *W_{f}* is the width of the filter (i.e., the length along the X-axis, which indicates the number of weights in a row in each kernel), and *C_{f}* is the depth of the filter (i.e., the length along the Z axis, which indicates the number of channels). In some embodiments, *C_{f}* equals *Cᵢₙ*. For purpose of simplicity and illustration, each filter 220 in FIG. 2 has a spatial size of 3×3×*C_{f}*, i.e., the filter 220 includes *C_{f}* kernels, each of which has a size of 3×3. The spatial size of the kernels is smaller than the spatial size of the 2D array for each input channel in the input tensor 210.

In the convolution, each filter 220 slides across the input tensor 210 and generates a 2D array for an output channel in the output tensor 230. In the embodiments of FIG. 2, the 2D array has a spatial size of 5×5. The output tensor 230 includes output elements (also referred to as "elements") arranged in a 3D matrix. Each output element in the output tensor may be represented by a (X, Y, Z) coordinate that indicates a position of the input elements in the 3D matrix. The output tensor 230 has a spatial size *Hₒᵤₜ* × *Wₒᵤₜ* × *Cₒᵤₜ*, where *Hₒᵤₜ* is the height of the 3D matrix (i.e., the length along the Y-axis, which indicates the number of activations in a column in the 2D array of each output channel), *Wₒᵤₜ* is the width of the 3D matrix (i.e., the length along the X-axis, which indicates the number of activations in a row in the 2D array of each output channel), and *Cₒᵤₜ* is the depth of the 3D matrix (i.e., the length along the Z axis, which indicates the number of output channels). *Cₒᵤₜ* may equal the number of filters 220 in the convolution. *Hₒᵤₜ* and *Wₒᵤₜ* may depend on the heights and weights of the input tensor 210 and each filter 220. *Hₒᵤₜ* and *Wₒᵤₜ* may also depend on padding (if any) of the input tensor 210, the stride of the convolution, other factors, or some combination thereof.

In an example step of the convolution, MAC operations can be performed on a subtensor 215 (which is highlighted with a dotted pattern in FIG. 2) in the input tensor and all the filters 220. The subtensor 215 has the same spatial size as each filter 220, which is 3×3×*Cᵢₙ*. The result of the MAC operations on the subtensor 215 and one filter 220 is a vector 235 in the output tensor 230. The vector 235 has a spatial size of 1 × 1 × *Cₒᵤₜ*. The vector 235 includes a sequence of output elements, which corresponds to different output channels in the output tensor 230.

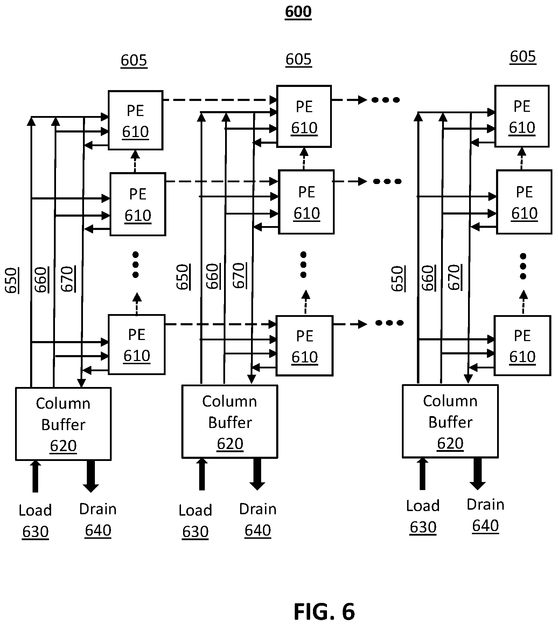

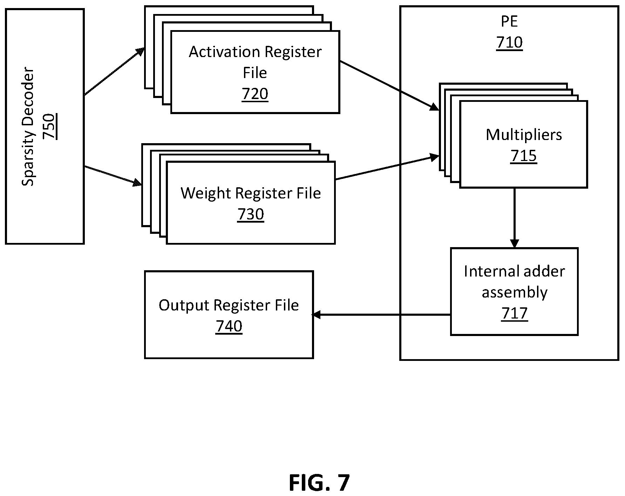

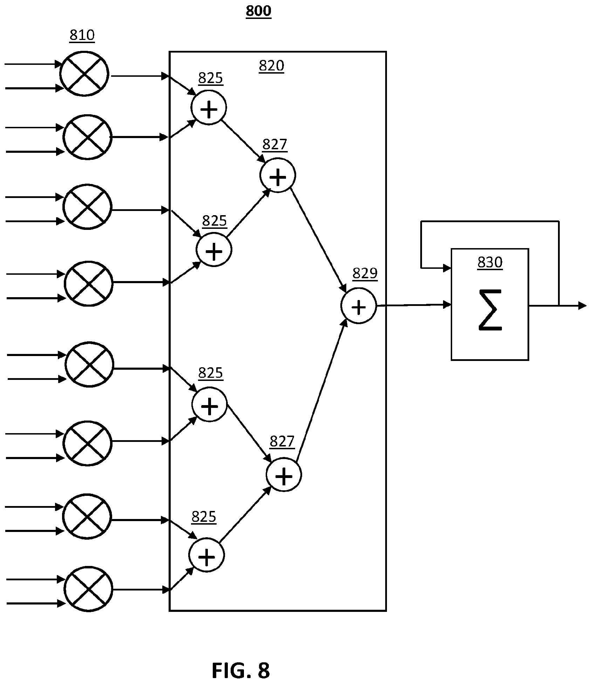

An individual MAC operation may be performed on an activation context 217 and a weight context 227. The activation context 217 may include a sequence of activations across all the input channels of the input tensor 210. The activations in the activation context 217 may have the same (X, Y) coordinate. In some embodiments, an activation context may include activations of multiple (X, Y) coordinates. The activation context 217 has a spatial size of 1 × 1 × *Cᵢₙ*. The weight context 227 may include a sequence of weight s across all the channels in a filter 220. The weights in the weight context 227may have the same (X, Y) coordinate. The weight context 227 has a spatial size of 1 × 1 × *Cᵢₙ*. In some embodiments, the activation context 217 and weight context 227 may be provided to a PE, such as a PE 610 in FIG. 6, PE 710 in FIG. 7, or PE 800 in FIG. 8. The PE performs the MAC operation on the activation context 217 and weight context 227.

The activation context 217 may include *Cᵢₙ* activations. An activation may include one or more bytes. The number of bytes in an activation may be based on the data format of the activation. In an example where the data format is INT8, an activation may include a single byte and the total number of bits in the activation context 217 is 8 ^{∗} *Cᵢₙ*. In another example where the data format is FP16 or BF16, an activation may include two bytes, and the total number of bits in the activation context 217 is 16 ^{∗} *Cᵢₙ*. Similarly, the weight context 227 may include *Cᵢₙ* weights. A weight may include one or more bytes. The number of bytes in a weight may be based on the data format of the activation. In an example where the data format is INT8, a weight may include a single byte and the total number of bits in the weight context 227 is 8 ^{∗} *Cᵢₙ*. In another example where the data format is FP16 or BF16, a weight may include two bytes, and the total number of bits in the weight context 227 is 16 ^{∗} *Cᵢₙ*. The activation context 217 and weight context 227 may be written into one or more memories (e.g., one or more registered files) associated with the PE and then read by the PE from the register files to perform the MAC operation. The result of the MAC operation can be written into another register file associated with the PE.

Some activations in the activation context 217 or weights in the weight context 227 may be sparse data. In some embodiments, a sparse datapoint, either a sparse activation or a sparse weight, has a value of zero. The sparse data may be a result of a process to compress the DNN, e.g., a weight pruning process, a result of applying a non-linear activation function (e.g., ReLU), or a result of other processes. Sparse data in the activation context 217 or the weight context 227 may not be stored or computed for the MAC operation. In some embodiments, the activation context 217 and the weight context 227 can be stored in a memory as packed data to reduce memory bandwidth, reduce data movement, and reduce memory usage. The non-sparse activations (or weights) can be stored at a sequence of memory addresses one after another. No memory address in the sequence is reserved or used for sparse data. That way, memory addresses of the non-sparse activations (or weights) cannot indicate positions of the non-sparse activations (or weights) in the activation context 217 (or weight context 227). Positions of the non-sparse activations (or weights) in the activation context 217 (or weight context 227) may be needed by the PE to perform sequential multiplication in the MAC operation. To solve this problem, a sparsity bitmap can be generated for the activation context 217 (or weight context 227).

The sparsity bitmap can indicate positions of non-sparse activations (or weights) in the activation context 217 (or weight context 227). In an example, the activation context 217 may have a sparsity bitmap that includes *Cᵢₙ* bits. Each bit corresponds to an activation in the activation context 217 and indicates whether the activation is sparse data or non-sparse data. For example, a bit for a sparse activation may be zero, and a bit for a non-sparse activation may be one. Similarly, the weight context 227 may have a sparsity bitmap that includes *Cᵢₙ* bits. Each bit corresponds to a weight in the weight context 227 and indicates whether the weight is sparse data (e.g., the bit is zero) or non-sparse data (e.g., the bit is one). In some embodiments, the MAC operation may have two sparsity bitmaps: one for the activation context 217 and one for the weight context 227. The sparsity bitmaps may be stored in the memory along with the activation context 217 and one for the weight context 227. A sparsity bitmap may also be referred to as a sparsity vector.

In some embodiments, the activation context 217 and the weight context 227 may be unpacked before they are provided to internal memories of the compute block. The activation context 217 and the weight context 227 may be unpacked based on their sparsity vectors. The compute block may perform sparsity processing on the unpacked data before providing the activations and weights to the PE for performing the MAC operation. More details regarding unpacking data and sparsity processing are described below in conjunction with FIGS. 3-12.

### Example DNN Accelerator

FIG. 3 illustrates a block diagram of a DNN accelerator 300, in accordance with various embodiments. The DNN accelerator 300 can run DNNs, e.g., the DNN 100 in FIG. 1. The DNN accelerator 300 includes a memory 310, a read module 320, a write module 330, and a compute block 340. In other embodiments, alternative configurations, different or additional components may be included in the DNN accelerator 300. For instance, the DNN accelerator 300 may include more than one memory 310, more than one read module 320, more than one write module 330, or more than one compute block 340. Further, functionality attributed to a component of the DNN accelerator 300 may be accomplished by a different component included in the DNN accelerator 300 or by a different system.

The memory 310 stores data to be used by the compute block 340 to perform deep learning operations in DNN models. Example deep learning operations include convolutions (also referred to as "convolutional operations"), pooling operations, elementwise operations, other types of deep learning operations, or some combination thereof. The memory 310 may be a main memory of the DNN accelerator 300. In some embodiments, the memory 310 includes one or more DRAMs (dynamic random-access memories) or one or more SRAMS (static random-access memories).

In some embodiments, the memory 310 may store input tensors, weights, or output tensors of DNN layers. For instance, the memory 310 may store the input tensor 210, filters 220, and output tensor 230 in FIG. 2. Data stored in the memory 310 may be packed data. In an example, the memory 310 stores non-sparse activations in an activation context (e.g., the activation context 217) and a sparsity vector of the activation context. In another example, the memory 310 stores non-sparse weights in a weight context (e.g., the weight context 227) and a sparsity vector of the weight context.

The read module 320 reads data from the memory 310 into the compute block 340. In some embodiments, the read module 320 receives packed data from the memory 310 and unpacks the packed data before transmitting the data to the compute block 340. As shown in FIG. 3, the read module 320 includes an unpacking module 325. The unpacking module 325 may unpack activation contexts or weight contexts based on sparsity vectors of the activation contexts or weight contexts. The unpacking module 325 may determine memory addresses of non-sparse bytes in a context (an activation context or weight context) based on the sparsity vector of the context. The non-sparse bytes received by the unpacking module 325 are packed, i.e., the non-sparse bytes are stored at consecutive addresses in the memory 310. The unpacking module 325 may place at least some of the non-sparse bytes at new addresses determined based on the sparsity bitmap. The unpacking module 325 may select a sequence of memory addresses. The number of memory addresses in the sequence may equal the total number of bytes (including non-sparse bytes and sparse bytes) in the context. The unpacking module 325 may place a non-sparse byte at an address so that the positions of the non-sparse byte in the context matches the positions of the address in the sequence. A memory address, which has a position matching a position of a sparse byte in the context, will store no byte.

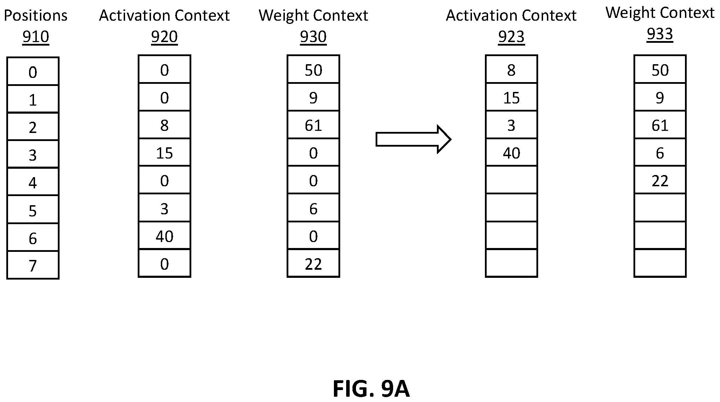

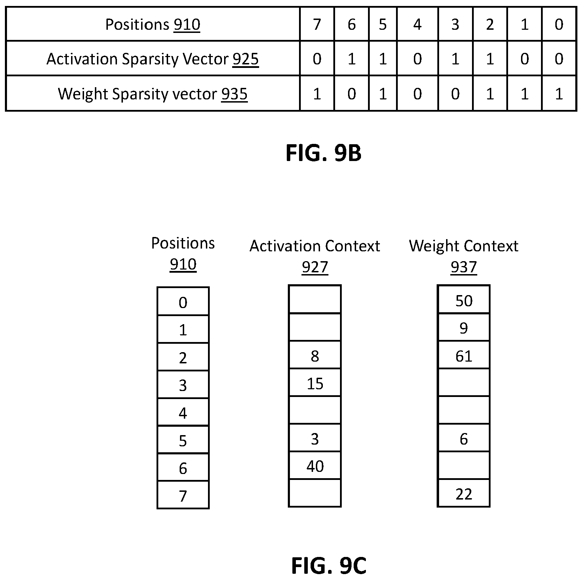

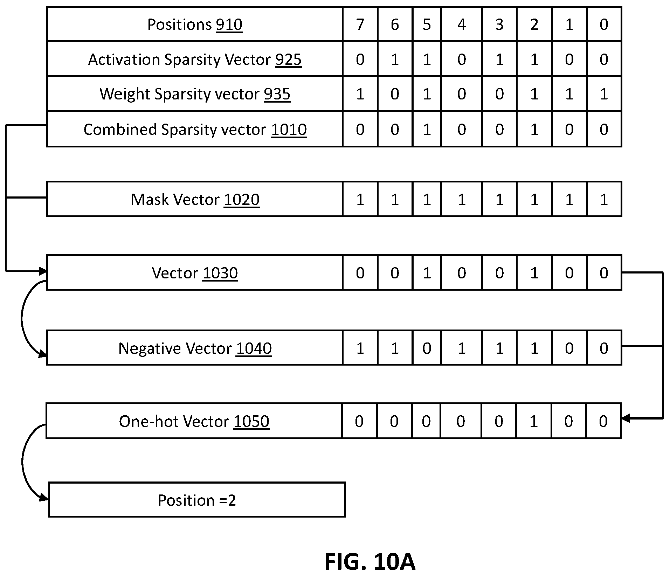

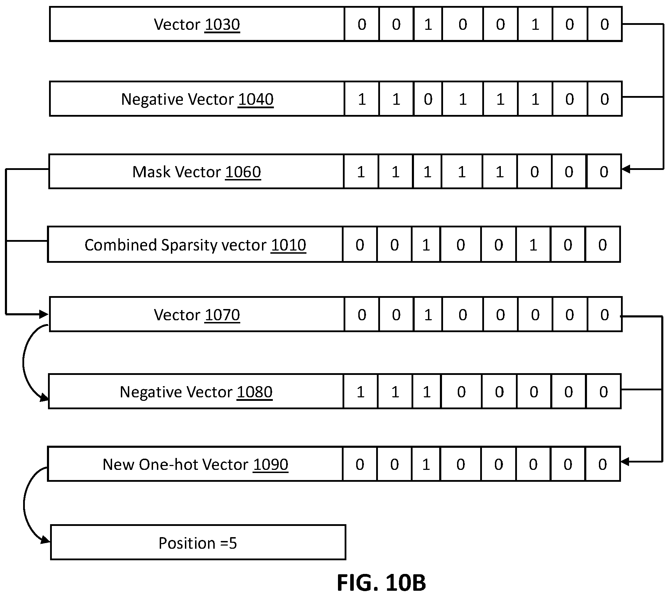

Taking a context including eight bytes for example, the first, fourth, sixth and eighth bytes in the context are non-zero values. These four bytes may be stored as packed data in the memory 310 at consecutive addresses 0×0, 0×1, 0×2, and 0×3. The other four bytes have zero values and are not stored in the memory 310. The unpacking module 325 may place the four non-sparse bytes at inconsecutive addresses 0×0, 0×3, 0×5, and 0×7. Addresses 0×1, 0×2, 0×4, and 0×6 are empty and do not store any bytes. The unpacked activation context and weight context may be used by the compute block 340 for executing a layer in the DNN. More details regarding unpacking data are described below in conjunction with FIGS. 9 and 10.

The write module 330 writes data from the compute block 340 into the memory 310. The write module 330 may receive unpacked data from the compute block 340 and converts the unpacked data to packed data before writing the data into the memory 310. The write module 330 includes a packing module 335. The packing module 335 may pack an output vector (e.g., the vector 235 in FIG. 2) based on sparsity of the output vector. The packing module 335 may identify sparse bytes or non-sparse bytes in the output vector and select consecutive addresses for the non-sparse bytes. In an example where the output vector includes eight bytes and the first, fourth, sixth and eighth bytes in the context are non-zero values, the packing module 335 may place these bytes at consecutive addresses 0×0, 0×1, 0×2, and 0×3. The write module 330 can write these four non-zero bytes at these addresses in the memory 310.

The write module 330 may also generate a sparsity vector for the output vector. The sparsity vector may include eight bits, where the first, fourth, sixth and eighth bits are one and the other four bits are zero. The write module 330 may also write the sparsity vector into the memory 310. The output vector may be used by the compute block 340 or another compute block 340 for executing a subsequent layer in the DNN.

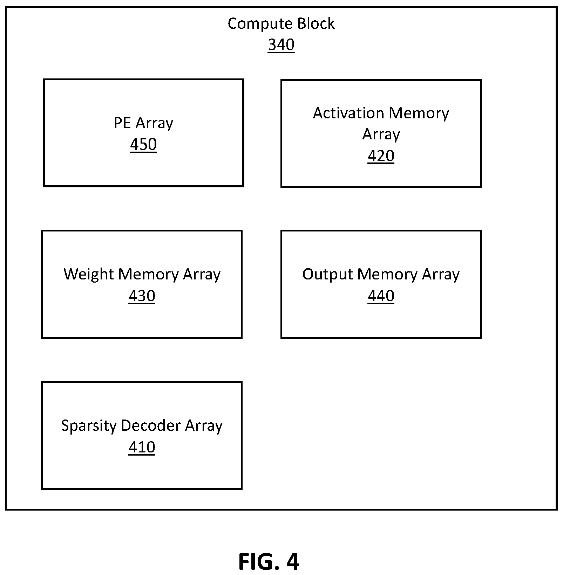

The compute block 340 performs computation for deep learning operations. The compute block 340 may run the operations in a DNN layer, or a portion of the operations in the DNN layer. The compute block 340 may also be referred to as a compute tile. In some embodiments, the operations of the DNN layers may be run by one or more other compute tiles in parallel with the compute block 340. The compute block 340 may perform convolutions, e.g., standard convolution or depthwise convolution. In some embodiments, the compute block 340 receive an input tensor and one or more convolutional kernels and performs a convolution with the input tensor and convolutional kernels. The result of the convolution may be an output tensor, which can be further computed, e.g., by another compute tile. The input tensor, convolutional kernels, or output tensor may be stored in internal memories of the compute block 340. Certain aspects of the compute block 340 are described below in conjunction with FIG. 4.

FIG. 4 illustrates a block diagram of the compute block 340, in accordance with various embodiments. The compute block 340 includes a PE array 410, an activation memory array 420, a weight memory array 430, an output memory array 440, and a sparsity decoder array 450. In other embodiments, alternative configurations, different or additional components may be included in the compute block 340. Further, functionality attributed to a component of the compute block 340 may be accomplished by a different component included in the compute block 340 or by a different system.

The PE array 410 performs MAC operations in convolutions. The PE array 410 includes PEs 345 arranged in columns, or columns and rows. An example of the PE array 410 is the PE array 600 in FIG. 6. A workload for an MAC operation may be assigned to a PE. In some embodiments, the workload may include a filter (e.g., the filter 220) and a subtensor (e.g., the subtensor 215) in the input tensor having the same size as the filter. In other embodiments, the workload may include an activation context and a weight context (e.g., the activation context 217 and weight context 227). The PE may include one or more multipliers and one or more accumulators. In embodiments where the PE includes multiple multipliers, the PE may receive multiple activations and multiple weights in a cycle of the MAC operation and the multipliers may each perform a multiplication operation on an activation and a weight. The multiplication operations of the multipliers may be done in parallel. In some embodiments (e.g., embodiments where the activation context and weight context include sparse data), the PE may receive and process non-sparse data in the activation context and weight context. The sparse data in the activation context and weight context may not be received or processed by the PE.

The activation memory array 420, weight memory array 430, and output memory array 440 are internal memories of the compute block 340. In the embodiment of FIG. 3, the activation memory array 420, weight memory array 430, and output memory array 440 are inside the compute block 340. In other embodiments, the activation memory array 420, weight memory array 430, and output memory array 440 may be outside the compute block 340. The activation memory array 420, weight memory array 430, and output memory array 440 and the compute block 340 may be implemented on the same chip.

The activation memory array 420 stores input tensors of convolutions performed by the compute block 340. The activation memory array 420 may include an array of activation register files. The activation register files may be arranged in columns, or columns and rows. In some embodiments, the layout of the activation register files in the activation memory array 420 may be the same as or similar to a layout of the PE array 410. For instance, the activation memory array 420 may have the same number of columns as the PE array 410. In each column, the number of activation register files may be equal to or more than the number of PEs in the corresponding PE column. In an embodiment, a PE may be associated with one or more activation register files that store activations to be used by the PE.

The weight memory array 430 stores kernels of convolutions performed by the compute block 340. The weight memory array 430 may include an array of weight register files. The weight register files may be arranged in columns, or columns and rows. In some embodiments, the layout of the weight register files in the weight memory array 430 may be the same as or similar to a layout of the PE array 410. For instance, the weight memory array 430 may have the same number of columns as the PE array 410. In each column, the number of weight register files may be equal to or more than the number of PEs in the corresponding PE column. In an embodiment, a PE may be associated with one or more weight register files that store weights to be used by the PE.

The output memory array 440 stores output tensors of convolutions performed by the compute block 340. The output memory array 440 may include an array of output register files. The output register files may be arranged in columns, or columns and rows. In some embodiments, the layout of the output register files in the output memory array 440 may be the same as or similar to a layout of the PE array 410. For instance, the output memory array 440 may have the same number of columns as the PE array 410. In each column, the number of output register files may equal the number of PEs in the corresponding PE column. In an embodiment, an output register file may be associated with a PE and store output elements produced by the PE from MAC operations.

The sparsity decoder array 450 processes sparsity of activation contexts and weight contexts. The sparsity decoder array 450 may include an array of sparsity decoders. The sparsity decoders may be arranged in columns, or columns and rows. In some embodiments, the layout of the sparsity decoders in the sparsity decoder array 450 may be the same as or similar to a layout of the PE array 410. For instance, the sparsity decoder array 450 may have the same number of columns as the PE array 410. In each column, the number of sparsity decoders may be less than or equal to the number of PEs in the corresponding PE column. A sparsity decoder may be associated with one or more PEs. In an embodiment, a PE may be associated with a sparsity decoder for decoding sparsity in an activation context and weight context to be computed by the PE.

A sparsity decoder may determine memory addresses for storing the non-sparse activations and non-sparse weights in activation register files and weight register files, respectively. In some embodiments, the sparsity decoder may perform sparsity processing on unpacked data and determine a single address for an activation and a weight. The activation may be stored at the address in an activation register file, and the weight may be stored at the address in a weight register file. The sparsity decoder may generate the address by using a combined sparsity vector. The sparsity decoder may generate the combined sparsity vector by combining the sparsity vector of the activation context and the sparsity vector of the weight context.

The combined sparsity vector includes a plurality of bits, each bit corresponding to a different activation in the activation context and a different weight in the weight index. The position of a bit in the combined sparsity vector may match the position of the corresponding activation in the activation context and the position of the corresponding weight in the weight index. The combined sparsity vector may include one or more zero valued bits and one or more one valued bits. A zero valued bit indicates at least one of the corresponding activation and the weight has a value of zero and therefore, the computation of the corresponding activation and the weight may not be needed. A one valued bit indicates both the corresponding activation and the weight has non-zero values and therefore, the computation of the corresponding activation and the weight is needed.

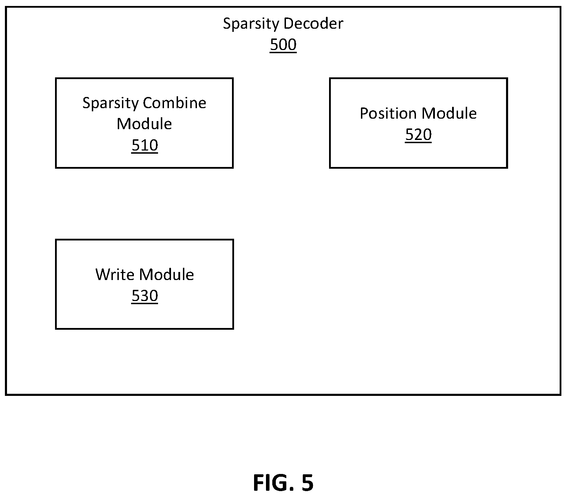

The sparsity decoder may also determine a position of a non-zero bit in the combined sparsity vector and generate an address for the corresponding activation and weight based on the position. A PE associated with the activation register file and the weight register file may perform computation on the activation and weight. The address for the activation in the activation register file may be the same as the address for the weight in the weight register file. In contrast, currently available sparsity decoders perform sparsity processing on packed data and have to generate two addresses for a pair of activation and weight: one for the activation and one for the weight. Also, as the data is packed, the currently available sparsity decoders need to use both the combined sparsity vector and the activation sparsity vector to determine the address of the activation. For the address of the weight, the currently available sparsity decoders need to use both the combined sparsity vector and the weight sparsity vector to determine the address. Thus, compared with the currently available sparsity decoders, the sparsity decoders in the compute block 340 need less digital circuit components and less power to process sparsity. Certain aspects of sparsity decoders in the compute block 340 are described below in conjunction with FIG. 5.

FIG. 5 illustrates a block diagram of a sparsity decoder 500, in accordance with various embodiments. The sparsity decoder 500 is associated with a PE and processes sparsity in activation contexts and weight contexts computed by the PE. The sparsity decoder 500 may be included in a sparsity decoder array, e.g., the sparsity decoder array 450 in FIG. 4. The sparsity decoder 500 includes a sparsity combine module 510, a position module 520, and a write module 530. In other embodiments, alternative configurations, different or additional components may be included in the sparsity decoder 500. Further, functionality attributed to a component of the sparsity decoder 500 may be accomplished by a different component included in the sparsity decoder 500 or by a different system.

The sparsity combine module 510 generates combined sparsity vectors based on activation sparsity vectors and weight sparsity vectors. In some embodiments, the sparsity combine module 510 receives an activation sparsity vector and a weight sparsity vector, e.g., form the read module 320. The activation sparsity vector and weight sparsity vector are for an activation context and a weight context, respectively, which are to be computed by a PE. The sparsity combine module 510 may perform a bit-level logic operation (e.g., an AND logic operation, OR logic operation, etc.) on the activation sparsity vector and weight sparsity vector to combine the activation sparsity vector and weight sparsity vector. For instance, the sparsity combine module 510 identifies a bit in the activation sparsity vector and a bit in the weight sparsity vector, the position of the bit in the activation sparsity vector matches the position of the bit in the weight sparsity vector.

Then the sparsity combine module 510 may perform a bit-level AND logic operation on the two bits. The AND logic operation may return a zero valued bit in embodiments where at least one of the two bits has a zero value or return a one valued bit in embodiments where both of the two bits have values of one. The sparsity combine module 510 may place the result of the AND logic operation to a position in the combined sparsity vector. The position in the combined sparsity vector matches the position of the bit in the activation sparsity vector and the position of the bit in the weight sparsity vector. More details regarding combining activation sparsity vectors and weight sparsity vectors are described below in conjunction with FIG. 10A.

The position module 520 determines positions of non-zero valued bits in the combined sparsity vector. In some embodiments, the position module 520 may operate in multiple cycles and in each cycle, the position module 520 determines a position of a different non-zero valued bit in the combined sparsity vector. In some embodiments, the position module 520 may determine positions of multiple non-zero valued bits in a single cycle. The position module 520 may generate a mask vector for each cycle. In an example, the mask vector for the first cycle may be a vector including a sequence of one valued bits. The number of bits in the mask vector may be the same as the number of bits in the combined sparsity vector. The position module 520 may generate a vector by performing an AND logic operation on the mask vector and the combined sparsity vector. The position module 520 may also generate a negative vector based on the vector. The decimal value of the negative vector is the negative of the decimal value of the vector. The position module 520 may further perform an AND logic operation on the vector and the negative vector, the result of which is a one-hot vector. The one-hot vector includes a single one valued bit and the other bits are zero valued. The one-hot vector specifies the position of a non-zero valued bit (e.g., the right most non-zero valued bit) in the combined sparsity vector.

The position module 520 may further determine the position of another non-zero valued bit in the combined sparsity vector in the next cycle. In some embodiments, the position module 520 generates a new mask vector for the new cycle, e.g., by removing the most right one valued bit and smearing to left. The position module 520 may perform an XOR operation on the vector and negative vector in the previous cycle. The XOR operation outputs one for a position where the bit in the vector and the bit in the negative vector are the same, but outputs zero for a position where the bit in the vector and the bit in the negative vector are different. Next, the position module 520 may generate a new vector by performing an AND logic operation on the new mask vector and the combined sparsity vector. The position module 520 may also generate a new negative vector of the new vector and generate a new one-hot vector by performing an AND logic operation on the vector and the negative vector. The new one-hot vector specifies the position of the other non-zero valued bit. In some embodiments, the position module 520 may use more cycles to determine positions of other non-zero valued bits in the combined sparsity vector.

The write module 530 determine an address for a pair of activation and weight based on a position of a non-zero valued bit in the combined sparsity vector. The write module 530 may determine the same address for the activation and the weight in the pair. As the activation context and the weight context is unpacked, the position in the combined sparsity vector can be mapped to the activation and weight. Also, the write module 530 may not need to use either the activation sparsity vector or the weight sparsity vector to generate address for the activation or weight. The write module 530 may write the activation to the address in an activation register file and write the weight to the address in a weight register file.

FIG. 6 illustrates a PE array, in accordance with various embodiments. The PE array 600 is an embodiment of the PE array 610 in FIG. 3. The PE array 600 includes a plurality of PEs 610 (individually referred to as "PE 610"). The PEs 610 perform MAC operations, such as integer MAC operations, floating-point MAC operations, and so on. The PEs 610 may also be referred to as neurons or nodes in the DNN. Each PE 610 has 2 input signals 650 and 660 and an output signal 670. The input signal 650 is at least a portion of an IFM to the layer. The input signal 660 is at least a portion of a filter of the layer. In some embodiments, the input signal 650 of a PE 610 includes an activation context, e.g., activation context 217, and the input signal 660 includes a weight context, e.g., the weight context 227. The input signal 650 and 660 may constitute an input set of the PE 610. In some embodiments, a PE 610 may receive multiple input sets at a time.

Each PE 610 performs an MAC operation on the input signals 650 and 660 and outputs the output signal 670, which is a result of the MAC operation. Some or all of the input signals 650 and 660 and the output signal 670 may be in an integer format, such as INT8, or floating-point format, such as FP16 or BF16. For purpose of simplicity and illustration, the input signals and output signal of all the PEs 610 have the same reference numbers, but the PEs 610 may receive different input signals and output different output signals from each other. Also, a PE 610 may be different from another PE 610, e.g., including more, fewer, or different components.

As shown in FIG. 6, the PEs 610 are connected to each other, as indicated by the dash arrows in FIG. 6. The output signal 670 of an PE 610 may be sent to many other PEs 610 (and possibly back to itself) as input signals via the interconnections between PEs 610. In some embodiments, the output signal 670 of an PE 610 may incorporate the output signals of one or more other PEs 610 through an accumulate operation of the PE 610 and generates an internal partial sum of the PE array 600

In the embodiments of FIG. 6, the PEs 610 are arranged into columns 605 (individually referred to as "column 605"). The input and weights of the layer may be distributed to the PEs 610 based on the columns 605. Each column 605 has a column buffer 620. The column buffer 620 stores data provided to the PEs 610 in the column 605 for a short amount of time. The column buffer 620 may also store data output by the last PE 610 in the column 605. The output of the last PE 610 may be a sum of the MAC operations of all the PEs 610 in the column 605, which is a column-level internal partial sum of the PE array 600. In other embodiments, input and weights may be distributed to the PEs 610 based on rows in the PE array 600. The PE array 600 may include row buffers in lieu of column buffers 620. A row buffer may store input signals of the PEs in the corresponding row and may also store a row-level internal partial sum of the PE array 600.

As shown in FIG. 6, each column buffer 620 is associated with a load 630 and a drain 640. The data provided to the column 605 is transmitted to the column buffer 620 through the load 630, e.g., through upper memory hierarchies. The data generated by the column 605 is extracted from the column buffers 620 through the drain 640. In some embodiments, data extracted from a column buffer 620 is sent to upper memory hierarchies. In some embodiments, the drain operation does not start until all the PEs 610 in the column 605 has finished their MAC operations.

In some embodiments, each PE column 605 may be associated with one or more MAC lanes. A MAC lane is a path for loading data (e.g., input signals 650 and 660) into a PE column. A MAC lane may be also referred to as a data transmission lane or data loading lane. A PE column may have multiple MAC lanes. The loading bandwidth of the PE column is an aggregation of the loading bandwidths of all the MAC lanes associated with the PE column. With a certain number of MAC lanes, data can be fed into the same number of independent MAC units simultaneously. These independent MAC units may be in the same PE. In some embodiments where a PE column has four MAC lanes for feeding activations or weights into the PE column and each MAC lane may have a bandwidth of 16 bytes, the four MAC lanes can have a total loading bandwidth of 64 bytes. In an embodiment where the activation or weight data was unicasted, four MAC units in one PE may receive the data. In another embodiment where the activation or weight data was multicoated, up to eight PEs and four MAC units in these PEs may receive the data. In some embodiments, the data reuse pattern of the DNN accelerator may determine how many PEs with four MAC units can receive the data.

FIG. 7 illustrates a PE 710 coupled to register files and a sparsity decoder 750, in accordance with various embodiments. The PE 710 may be an embodiment of the PE 610 in FIG. 6. In the embodiments of FIG. 7, the PE 710 includes multipliers 715 (individually referred to as "multiplier 715") and an internal adder assembly 717. The register files coupled to the PE 710 include activation register files 720 (individually referred to as "activation register file 720"), weight register files 730 (individually referred to as "weight register file 730"), and an output register file 740. In other embodiments, the PE 710 may be coupled to a single activation register file 720, a single, weight register file 730, or multiple output register files 740.

The activation register files 720 temporarily stores activations to be used by the PE 710 for MAC operations. The weight register files 730 temporarily stores weights to be used by the PE 710 for the MAC operations. The output register file 740 temporarily stores output elements produced by the PE 710 from the MAC operations. The activation register file 720 may be an embodiment of an activation register file in the activation memory array 420 in FIG. 4. The weight register file 730 may be an embodiment of a weight register file in the weight memory array 430 in FIG. 4. The output register file 740 may be an embodiment of an output register file in the output memory array 440 in FIG. 4.

The PE 710 perform MAC operations on data in the activation register file 720 and weight register file 730. The multipliers 715 may perform multiplications in the MAC operations. The internal adder assembly 717 may perform accumulations in the MAC operations. The internal adder assembly 717 may include one or more accumulators. An accumulator may be coupled to two or more of the multipliers 715 and can accumulate products generated by the multipliers 715. The internal adder assembly 717 may output a result of the MAC operation performed by the PE 710. The result may be further accumulated by an accumulator in the internal adder assembly or another accumulator (e.g., an accumulator external to the PE 710) with a result of an MAC operation performed by another PE.

The sparsity decoder 750 processes sparsity of activation contexts and weight contexts from a memory, e.g., the memory 310, and generates addresses to write non-spare activations and non-sparse weights into the activation register files 720 and the weight register files 730. The sparsity decoder 750 may be an embodiment of the sparsity decoder 500 in FIG. 5. In FIG. 7, the sparsity decoder 750 receives an activation context and a weight context for an MAC operation. The sparsity decoder 750 generates a combined sparsity vector for the MAC operation. The combined sparsity vector indicates positions of activations and weights in the activation context and a weight context, respectively, that need to be computed by the PE 710. For instance, the activations and weights have non-zero values.

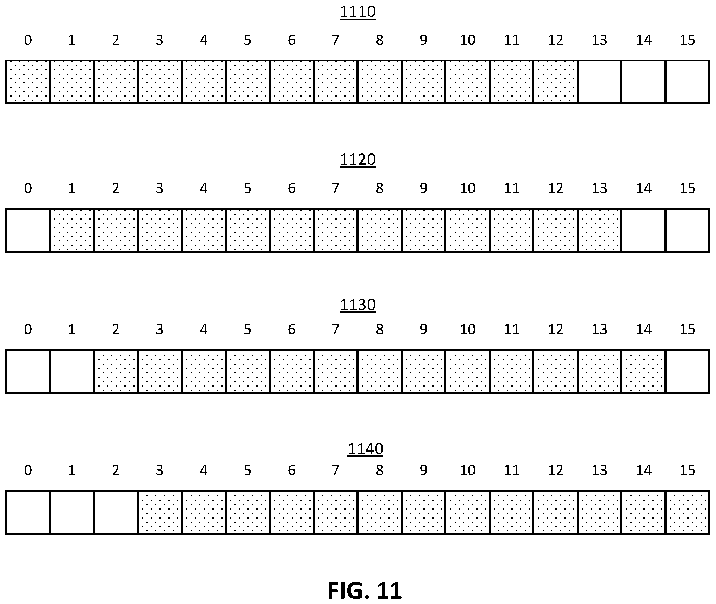

The sparsity decoder 750 may process the combined sparsity vector to determine a position of a one valued bit in the combined sparsity vector and maps the position to an address. In some embodiments, the sparsity decoder 750 may process a portion of the combined sparsity vector ("narrowed sparsity processing"), as opposed to the whole combined sparsity vector, to determine the position of the bit. More details regarding narrowed sparsity processing are described below in conjunction with FIG. 11.

The sparsity decoder 750 may write the activation to the address in an activation register file 720 and write the weight to the address in a weight register file 730. The activation and weights can be fetched by a multiplier 715 from the activation register file 720 and the weight register file 730, respectively. The multiplier 715 can multiply the activation with the weight. The product of the multiplication may be sent to an accumulator in the internal adder assembly 717 for being accumulated with one or more products of other multiplications.

FIG. 8 illustrates a multi-input PE 800, in accordance with various embodiments. For purpose of illustration, the PE 800 can receive up to eight inputs at a time. An input includes an activation and a weight. The position of the activation in an activation context may be the same as the position of the weight in a weight context. The activations in the eight inputs may be from the same activation context. The weights in the eight inputs may be from the same weight context. The PE 800 includes eight multipliers 810 (individually referred to as "multiplier 810"), an adder tree 820, and an adder 830. In other embodiments, alternative configurations, different or additional components may be included in the PE 800. Further, functionality attributed to a component of the PE 800 may be accomplished by a different component included in the PE 800 or by a different device. The PE 800 may be an example of the PE 610 in FIG. 6 or an example of the PE 710 in FIG. 7.

The multipliers 810 may work in parallel. In some embodiments, the multipliers 810 receive eight activation and eight weights. Each multiplier 810 may receive a single activation and a single weight. The multiplier 810 multiplies the activation and weight and produces a product. The product is provided to the adder tree 820.

The adder tree 820 includes multiple tiers. The first tier includes four adders 825 (individually referred to as "adder 825"), the second tier includes two adders 827 (individually referred to as "adder 827"), and the third tier includes an adder 829. An adder 825 is coupled to two multipliers 810 and accumulates two products from the two multipliers 810 to generate a sum. An adder 827 is coupled to two adders 825 and accumulates two sums from the two adders 825. The accumulation results of the two adders 827 are further accumulated by the adder 829. The result of the accumulation by the adder 829 may be an internal output of the PE 800. The output of the PE 800 may be provided to the adder 830. The adder 830 may accumulates multiple internal outputs of multiple PEs and generate an internal partial sum of the PE array where the PE 800 is located. In some embodiments, the internal partial sum is a sum of internal outputs of PEs arranged in a column in the PE array.

FIGS. 9A-9C illustrate unpacking data, in accordance with various embodiments. In FIG. 9A, dense vectors are converted to sparse vectors. FIG. 9A shows two dense vectors: an activation context 920 and a weight context 930. FIG. 9A also shows positions 910 of bits in the activation context 920 and weight context 930. For purpose of illustration, the activation context 920 and a weight context 930 each includes eight data points. A data point may take a byte in a memory. A data point in the activation context 920 is an activation. A data point in the weight context 930 is a weight. Each weight corresponds to a different activation. The weight and corresponding activation have the same position. The activation context 920 and weight context 930 are dense data as all activations and all weights are stored, including sparse activations and sparse weights.

The activation context 920, which is dense data, is converted to an activation context 923, which is sparse data. The weight context 930 is converted to weight context 933. The activation context 923 and weight context 933 are packed sparse data. The zero valued activations and zero valued weights are removed. The activation context 923 includes the non-zero valued activations having consecutive positions. The weight context 933 includes the non-zero valued weights having consecutive positions. In some embodiments, the activation context 923 may be stored at four consecutive addresses in a memory. Each address is for one of the non-zero valued activations. The weight context 933 may also be stored at four consecutive addresses in a memory. Each address is for one of the non-zero valued weights. Due to the conversion, the positions of the non-zero valued activations are changed. Also, the positions of some of the non-zero valued weights are changed.

Sparsity vectors (e.g., an activation sparsity vector 925 and weight sparsity vector 935 shown in FIG. 9B) are generated to provide information about the original positions of the non-zero valued activations and the non-zero valued weights (i.e., positions in the activation context 920 and weight context 930, respectively). The position information may be needed for an MAC operation on the activation context 920 and weight context 930 as the right activation and weight need to be identified for each multiplication in the MAC operation. The activation context 923, weight context 933, and their sparsity vectors may be stored in a memory, e.g., the memory 310.

FIG. 9B shows the activation sparsity vector 925 and weight sparsity vector 935. The activation sparsity vector 925 includes eight bits, each of which indicates whether an activation having the same position is sparse or not. A bit for a zero valued activation is zero, and a bit for a non-zero valued activation is one. The weight sparsity vector 935 includes eight bits, each of which indicates whether a weight having the same position is sparse or not. A bit for a zero valued weight is zero, and a bit for a non-zero valued weight is one.

In FIG. 9C, the activation context 923 and weight context 933 are packed and converted to an activation context 927 and a weight context 937, respectively. The activation context 927 and the weight context 937 are unpacked. The activation context 923 is converted to the activation context 927 based on the activation sparsity vector 925. The non-zero valued activations are moved to their original positions. Even though the activation context 927 includes four bytes, a sequence of addresses for eight bytes may be used for the activation context 927. The non-zero valued activations have inconsecutive addresses that match their positions in the activation context 927. Some of the addresses in the sequence (e.g., addresses corresponding to positions of zero valued activations) are not used and can be empty.

Similarly, the weight context 933 is converted to the weight context 937 based on the weight sparsity vector 935. The non-zero valued weights are moved to their original positions. The weight context 933 uses a sequence of addresses for eight bytes. The non-zero valued weights have inconsecutive addresses in the sequence, the positions of the inconsecutive addresses in the sequence match the positions of the non-zero valued weights in the weight context 933, Some of the addresses in the sequence (e.g., addresses corresponding to positions of zero valued weights) are not used and can be empty.

FIGS. 10A and 10B illustrate processing sparsity of unpacked data, in accordance with various embodiments. The sparsity process may be performed by a sparsity decoder, e.g., the sparsity decoder 500 in FIG. 5 or the sparsity decoder 750 in FIG. 7. FIG. 10A shows a first cycle of the sparsity processing, through which the position of a non-zero bit in a combined sparsity vector 1010 is determined. In FIG. 10A, the activation sparsity vector 925 and weight sparsity vector 935 in FIG. 9B are combined to generate a combined sparsity vector 1010. The combined sparsity vector 1010 also include eight bits. Each bit is generated by an AND operation on a bit in the activation sparsity vector 925 and a bit in the weight sparsity vector 935. The three bits have the same position. FIG. 10A also shown an initial mask vector 1020 that includes eight one valued bits. A vector 1030 is generated through an AND operation on the combined sparsity vector 1010 and the initial mask vector 1020. A bit in the vector 1030 may be a result of an AND operation on a bit in the combined sparsity vector 1010 and a bit the initial mask vector 1020. These three bits have the same position. A negative vector 1040 is also generated. A decimal value of the negative vector 1040 is the negative of the decimal value of the vector 1030. An AND operation is performed on the vector 1030 and the negative vector 1040 to generate a one-hot vector 1050. The one-hot vector 1050 includes a single one valued bit and seven zero valued bits. A decimal value of the one-hot vector 1050 is 2, which indicates that the position of the non-zero bit in the combined sparsity vector 1010 is 2.

FIG. 10B shows a second cycle of the sparsity processing, through which the position of the other non-zero valued bit in the combined sparsity vector 1010 is determined. In FIG. 10B, an XOR operation is performed on the vector 1030 and the negative vector 1040 to generate a new mask vector 1060. An AND operation on the combined sparsity vector 1010 and the mask vector 1060, which produces a new vector 1070. Also, a negative vector 1080 is generated based on the vector 1070. A decimal value of the negative vector 1080 is the negative of the decimal value of the vector 1070. An AND operation is performed on the vector 1070 and the negative vector 1080 to generate a one-hot vector 1090. The one-hot vector 1090 includes a single one valued bit and seven zero valued bits. A decimal value of the one-hot vector 1090 is 5, which indicates that the position of the other non-zero bit in the combined sparsity vector 1010 is 5. In some embodiments, the one-hot vectors 1050 and 1090 may be processed by an encoder to produce a sequence of memory addresses for the non-zero valued activations (or weights). The encoder may use binary encoding or gray encoding to generate the memory addresses. In embodiments where gray encoding is used, two adjacent memory addresses in the sequence are different by one bit. To read the next non-zero valued activation (or weight), a single bit in the memory address needs to be changed but the other bits in the memory address can remain the same. This can reduce bit switching on the address buses in data read transactions.

The two positions of the non-zero bits in the combined sparsity vector 1010 can be used to generate addresses of the corresponding activations and weights. The activation and weight corresponding to the same bit in the combined sparsity vector 1010 may have the same address.

FIG. 11 illustrates narrowed sparsity processing, in accordance with various embodiments. In FIG. 11, the sparsity processing is narrowed as not the whole combined sparsity vector need to be processed for determining the position of a non-zero bit in the combined sparsity vector. For purpose of illustration, FIG. 11 shows four sparsity processing operations 1110, 1120, 1130, and 1140 of non-zero bits within the same combined sparsity vector. The sparsity processing operations 1110, 1120, 1130, and 1140 may be performed in parallel in a cycle of an MAC operation.

For purpose of illustration, the combined sparsity vector has 16 bits: bits[0:15]. The sparsity processing operation 1110 is performed on bits[0:12]. The sparsity processing operation 1120 is performed on bits[1:13]. The sparsity processing operation 1130 is performed on bits[2:14]. The sparsity processing operation 1140 is performed on bits[3:15]. Compared with currently available technologies that process the whole combined sparsity vector in each sparsity processing operation, the narrowed sparsity processing can save time and power as less bits are processed.

The narrowed sparsity processing is facilitated by data unpacking, e.g., data unpacking shown in FIGS. 9A-9C. As the activation context and weight context are unpacked, the bits in an output of a PE are also unpacked and can be independent from each other. In some embodiments, the sparsity processing operation 1110 may determine the position of a non-zero valued bit in the combined sparsity vector that corresponds to the first bit (output bit[0]) in the output of the PE. The sparsity processing operation 1120 may determine the position of a non-zero valued bit in the combined sparsity vector that corresponds to the second bit (output bit[1]) in the output of the PE. The sparsity processing operation 1130 may determine the position of a non-zero valued bit in the combined sparsity vector that corresponds to the third bit (output bit[2]) in the output of the PE. The sparsity processing operation 1120 may determine the position of a non-zero valued bit in the combined sparsity vector that corresponds to the fourth bit (output bit[3]) in the output of the PE. In some embodiments, the position of the non-zero valued bit determined from each sparsity processing operation is used for generating an address of an activation and a weight. The activation and weight may be provided to a multiplier in the PE for a multiplication operation.

### Example Method of Deep Learning

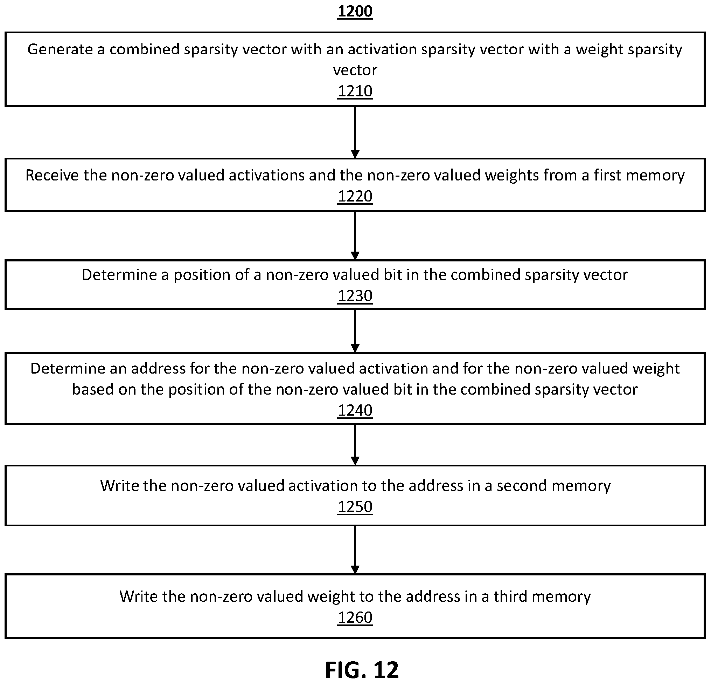

FIG. 12 is a flowchart showing a method 1200 of deep learning, in accordance with various embodiments. The method 1200 may be performed by the sparsity decoder 500 in FIG. 5. Although the method 1200 is described with reference to the flowchart illustrated in FIG. 12, many other methods for deep learning may alternatively be used. For example, the order of execution of the steps in FIG. 12 may be changed. As another example, some of the steps may be changed, eliminated, or combined.

The sparsity decoder 500 generates 1210 a combined sparsity vector with an activation sparsity vector with a weight sparsity vector. The activation sparsity vector indicates positions of non-zero valued activations in an activation context of a convolution. The weight sparsity vector indicates positions of non-zero valued weights in a weight context of the convolution. The combined sparsity vector comprises a zero valued bit and a non-zero valued bit.

The sparsity decoder 500 receives 1220 the non-zero valued activations and the non-zero valued weights from a first memory. In some embodiments, the non-zero valued activations or the non-zero valued weights were stored at consecutive addresses in the first memory. The consecutive addresses have been changed to inconsecutive addresses in a sequence of addresses. The number of addresses in the sequence of addresses equals a number of activations in the activation context. One or more addresses in the sequence of addresses do not store any data. In some embodiments, the consecutive addresses have been changed to the inconsecutive addresses in the sequence of addresses based on the activation sparsity vector or the weight sparsity vector. Positions of the inconsecutive addresses in the sequence of addresses match positions of non-zero valued bits in the activation sparsity vector or the weight sparsity vector.

The sparsity decoder 500 determines 1230 the position of a non-zero valued bit in the combined sparsity vector. In some embodiments, the sparsity decoder 500 identifies the non-zero valued bit within a subset of the combined sparsity vector. In some embodiments, the sparsity decoder 500 generates a vector based on the combined sparsity vector and a mask vector. The sparsity decoder 500 also generates a one-hot vector based on the vector. The one-hot vector comprises one non-zero valued bit and a plurality of zero valued bits. The sparsity decoder 500 determines the position based on the one-hot vector.

The sparsity decoder 500 determines 1240 an address for the non-zero valued activation and for the non-zero valued weight based on the position of the non-zero valued bit in the combined sparsity vector. In some embodiments, the sparsity decoder 500 determines a sequence of addresses in the second memory for the non-zero valued activations in the activation context. In an embodiment, the sparsity decoder 500 determines the position based on the one-hot vector and gray codes so that two adjacent addresses in the sequence are different by one bit.

The sparsity decoder 500 writes 1250 the non-zero valued activation into the address in a second memory. The sparsity decoder 500 writes 1250 the non-zero valued weight to the address in a third memory. The second or third memory may be a register file.

In some embodiments, the convolution is performed by a compute block, the first memory is outside the compute block. The second memory and the third memory are inside the compute block. In some embodiments, the activation context and the weight context are used by a PE associated with the second memory and the third memory to perform an MAC operation.

In some embodiments, the PE comprises a first multiplier, a second multiplier, and an accumulator. The first multiplier is to perform a first multiplication operation on the non-zero valued activation and the non-zero valued weight. The second multiplier is to perform a second multiplication operation on another non-zero valued activation in the activation context and another non-zero valued weight in the weight context. The accumulator is to accumulate a result of the first multiplication operation and a result of the second multiplication operation.

### Example Deep Learning Environment

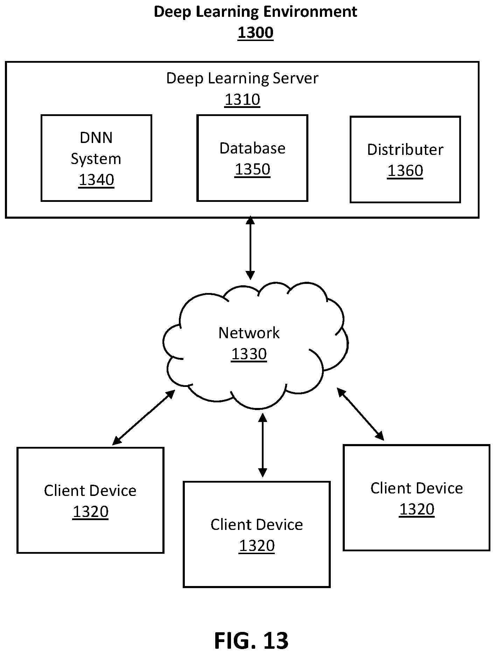

FIG. 13 illustrates a deep learning environment 1300, in accordance with various embodiments. The deep learning environment 1300 includes a deep learning server 1310 and a plurality of client devices 1320 (individually referred to as client device 1320). The deep learning server 1310 is connected to the client devices 1320 through a network 1330. In other embodiments, the deep learning environment 1300 may include fewer, more, or different components.

The deep learning server 1310 trains deep learning models using neural networks. A neural network is structured like the human brain and consists of artificial neurons, also known as nodes. These nodes are stacked next to each other in 3 types of layers: input layer, hidden layer(s), and output layer. Data provides each node with information in the form of inputs. The node multiplies the inputs with random weights, calculates them, and adds a bias. Finally, nonlinear functions, also known as activation functions, are applied to determine which neuron to fire. The deep learning server 1310 can use various types of neural networks, such as DNN, recurrent neural network (RNN), generative adversarial network (GAN), long short-term memory network (LSTMN), and so on. During the process of training the deep learning models, the neural networks use unknown elements in the input distribution to extract features, group objects, and discover useful data patterns. The deep learning models can be used to solve various problems, e.g., making predictions, classifying images, and so on. The deep learning server 1310 may build deep learning models specific to particular types of problems that need to be solved. A deep learning model is trained to receive an input and outputs the solution to the particular problem.

In FIG. 13, the deep learning server 1310 includes a DNN system 1340, a database 1350, and a distributer 1360. The DNN system 1340 trains DNNs. The DNNs can be used to process images, e.g., images captured by autonomous vehicles, medical devices, satellites, and so on. In an embodiment, a DNN receives an input image and outputs classifications of objects in the input image. An example of the DNNs is the DNN 100 described above in conjunction with FIG. 1. In some embodiments, the DNN system 1340 trains DNNs through knowledge distillation, e.g., dense-connection based knowledge distillation. The trained DNNs may be used on low memory systems, like mobile phones, IOT edge devices, and so on. An embodiment of the DNN system 1340 is the DNN accelerator 200 described above in conjunction with FIG. 2.

The database 1350 stores data received, used, generated, or otherwise associated with the deep learning server 1310. For example, the database 1350 stores a training dataset that the DNN system 1340 uses to train DNNs. In an embodiment, the training dataset is an image gallery that can be used to train a DNN for classifying images. The training dataset may include data received from the client devices 1320. As another example, the database 1350 stores hyperparameters of the neural networks built by the deep learning server 1310.

The distributer 1360 distributes deep learning models generated by the deep learning server 1310 to the client devices 1320. In some embodiments, the distributer 1360 receives a request for a DNN from a client device 1320 through the network 1330. The request may include a description of a problem that the client device 1320 needs to solve. The request may also include information of the client device 1320, such as information describing available computing resource on the client device. The information describing available computing resource on the client device 1320 can be information indicating network bandwidth, information indicating available memory size, information indicating processing power of the client device 1320, and so on. In an embodiment, the distributer may instruct the DNN system 1340 to generate a DNN in accordance with the request. The DNN system 1340 may generate a DNN based on the information in the request. For instance, the DNN system 1340 can determine the structure of the DNN and/or train the DNN in accordance with the request.

In another embodiment, the distributer 1360 may select the DNN from a group of pre-existing DNNs based on the request. The distributer 1360 may select a DNN for a particular client device 1320 based on the size of the DNN and available resources of the client device 1320. In embodiments where the distributer 1360 determines that the client device 1320 has limited memory or processing power, the distributer 1360 may select a compressed DNN for the client device 1320, as opposed to an uncompressed DNN that has a larger size. The distributer 1360 then transmits the DNN generated or selected for the client device 1320 to the client device 1320.

In some embodiments, the distributer 1360 may receive feedback from the client device 1320. For example, the distributer 1360 receives new training data from the client device 1320 and may send the new training data to the DNN system 1340 for further training the DNN. As another example, the feedback includes an update of the available computer resource on the client device 1320. The distributer 1360 may send a different DNN to the client device 1320 based on the update. For instance, after receiving the feedback indicating that the computing resources of the client device 1320 have been reduced, the distributer 1360 sends a DNN of a smaller size to the client device 1320.

The client devices 1320 receive DNNs from the distributer 1360 and applies the DNNs to perform machine learning tasks, e.g., to solve problems or answer questions. In various embodiments, the client devices 1320 input images into the DNNs and uses the output of the DNNs for various applications, e.g., visual reconstruction, augmented reality, robot localization and navigation, medical diagnosis, weather prediction, and so on. A client device 1320 may be one or more computing devices capable of receiving user input as well as transmitting and/or receiving data via the network 1330. In one embodiment, a client device 1320 is a conventional computer system, such as a desktop or a laptop computer. Alternatively, a client device 1320 may be a device having computer functionality, such as a personal digital assistant (PDA), a mobile telephone, a smartphone, an autonomous vehicle, or another suitable device. A client device 1320 is configured to communicate via the network 1330. In one embodiment, a client device 1320 executes an application allowing a user of the client device 1320 to interact with the deep learning server 1310 (e.g., the distributer 1360 of the deep learning server 1310). The client device 1320 may request DNNs or send feedback to the distributer 1360 through the application. For example, a client device 1320 executes a browser application to enable interaction between the client device 1320 and the deep learning server 1310 via the network 1330. In another embodiment, a client device 1320 interacts with the deep learning server 1310 through an application programming interface (API) running on a native operating system of the client device 1320, such as IOS^{®} or ANDROID^{™}.

In an embodiment, a client device 1320 is an integrated computing device that operates as a standalone network-enabled device. For example, the client device 1320 includes display, speakers, microphone, camera, and input device. In another embodiment, a client device 1320 is a computing device for coupling to an external media device such as a television or other external display and/or audio output system. In this embodiment, the client device 1320 may couple to the external media device via a wireless interface or wired interface (e.g., an HDMI (High-Definition Multimedia Interface) cable) and may utilize various functions of the external media device such as its display, speakers, microphone, camera, and input devices. Here, the client device 1320 may be configured to be compatible with a generic external media device that does not have specialized software, firmware, or hardware specifically for interacting with the client device 1320.

The network 1330 supports communications between the deep learning server 1310 and client devices 1320. The network 1330 may comprise any combination of local area and/or wide area networks, using both wired and/or wireless communication systems. In one embodiment, the network 1330 may use standard communications technologies and/or protocols. For example, the network 1330 may include communication links using technologies such as Ethernet, 13010.11, worldwide interoperability for microwave access (WiMAX), 3G, 4G, code division multiple access (CDMA), digital subscriber line (DSL), etc. Examples of networking protocols used for communicating via the network 1330 may include multiprotocol label switching (MPLS), transmission control protocol/Internet protocol (TCP/IP), hypertext transport protocol (HTTP), simple mail transfer protocol (SMTP), and file transfer protocol (FTP). Data exchanged over the network 1330 may be represented using any suitable format, such as hypertext markup language (HTML) or extensible markup language (XML). In some embodiments, all or some of the communication links of the network 1330 may be encrypted using any suitable technique or techniques.

### Example DNN System

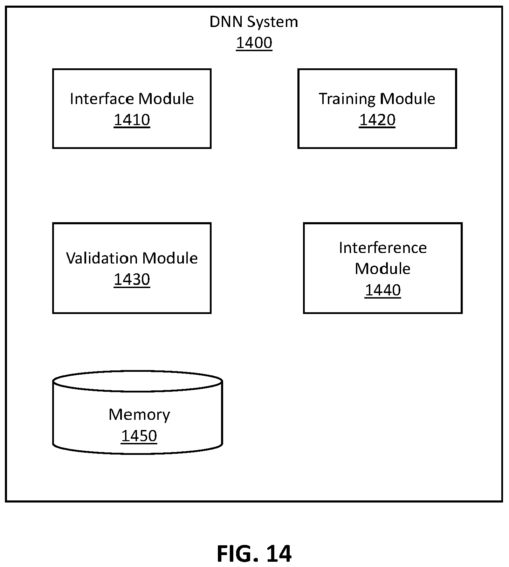

FIG. 14 is a block diagram of an example DNN system 1400, in accordance with various embodiments. The whole DNN system 1400 or a part of the DNN system 1400 may be implemented in the computing device 1400 in FIG. 14. The DNN system 1400 trains DNNs for various tasks, such as image classification, learning relationships between biological cells (e.g., DNA, proteins, etc.), control behaviors for devices (e.g., robots, machines, etc.), and so on. The DNN system 1400 includes an interface module 1410, a training module 1420, a validation module 1430, an inference module 1440, and a memory 1450. In other embodiments, alternative configurations, different or additional components may be included in the DNN system 1400. Further, functionality attributed to a component of the DNN system 1400 may be accomplished by a different component included in the DNN system 1400 or a different system. The DNN system 1400 or a component of the DNN system 1400 (e.g., the training module 1420 or inference module 1440) may include the computing device 1400.

The interface module 1410 facilitates communications of the DNN system 1400 with other systems. For example, the interface module 1410 establishes communications between the DNN system 1400 with an external database to receive data that can be used to train DNNs or input into DNNs to perform tasks. As another example, the interface module 1410 supports the DNN system 1400 to distribute DNNs to other systems, e.g., computing devices configured to apply DNNs to perform tasks.

The training module 1420 trains DNNs by using a training dataset. The training module 1420 forms the training dataset. In an embodiment where the training module 1420 trains an DNN to recognize objects in images, the training dataset includes training images and training labels. The training labels describe ground-truth classifications of objects in the training images. In some embodiments, each label in the training dataset corresponds to an object in a training image. In some embodiments, a part of the training dataset may be used to initially train the DNN, and the rest of the training dataset may be held back as a validation subset used by the validation module 1430 to validate performance of a trained DNN. The portion of the training dataset not including the tuning subset and the validation subset may be used to train the DNN.

The training module 1420 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 14, 140, 500, 1400, or even larger.

The training module 1420 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and neurons. It connects neurons in one layer to neurons in another layer. It is used to classify images between different category by training.

In the process of defining the architecture of the DNN, the training module 1420 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 1420 defines the architecture of the DNN, the training module 1420 inputs a training dataset into the DNN. The training dataset includes a plurality of training samples. An example of a training sample includes an object in an image and a ground-truth label of the object. The training module 1420 modifies the parameters inside the DNN ("internal parameters of the DNN") to minimize the error between labels of the training objects that are generated by the DNN and the ground-truth labels of the objects. The internal parameters include weights of filters in the convolutional layers of the DNN. In some embodiments, the training module 1420 uses a cost function to minimize the error.

The training module 1420 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 1420 finishes the predetermined number of epochs, the training module 1420 may stop updating the parameters in the DNN. The DNN having the updated parameters is referred to as a trained DNN.

The validation module 1430 verifies accuracy of trained DNNs. In some embodiments, the validation module 1430 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 1430 determines may determine an accuracy score measuring the precision, recall, or a combination of precision and recall of the DNN. The validation module 1430 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 1430 may compare the accuracy score with a threshold score. In an example where the validation module 1430 determines that the accuracy score of the augmented model is lower than the threshold score, the validation module 1430 instructs the training module 1420 to re-train the DNN. In one embodiment, the training module 1420 may iteratively re-train the DNN until the occurrence of a stopping condition, such as the accuracy measurement indication that the DNN may be sufficiently accurate, or a number of training rounds having taken place.

The inference module 1440 applies the trained or validated DNN to perform tasks. For instance, the inference module 1440 inputs images into the DNN. The DNN outputs classifications of objects in the images. As an example, the DNN may be provisioned in a security setting to detect malicious or hazardous objects in images captured by security cameras. As another example, the DNN may be provisioned to detect objects (e.g., road signs, hazards, humans, pets, etc.) in images captured by cameras of an autonomous vehicle. The input to the DNN may be formatted according to a predefined input structure mirroring the way that the training dataset was provided to the DNN. The DNN may generate an output structure which may be, for example, a classification of the image, a listing of detected objects, a boundary of detected objects, or the like. In some embodiments, the inference module 1440 distributes the DNN to other systems, e.g., computing devices in communication with the DNN system 1400, for the other systems to apply the DNN to perform the tasks.

The memory 1450 stores data received, generated, used, or otherwise associated with the DNN system 1400. For example, the memory 1450 stores the datasets used by the training module 1420 and validation module 1430. The memory 1450 may also store data generated by the training module 1420 and validation module 1430, such as the hyperparameters for training DNNs, internal parameters of trained DNNs (e.g., values of tunable parameters of FALUs), etc. In the embodiment of FIG. 14, the memory 1450 is a component of the DNN system 1400. In other embodiments, the memory 1450 may be external to the DNN system 1400 and communicate with the DNN system 1400 through a network.

### Example Computing Device

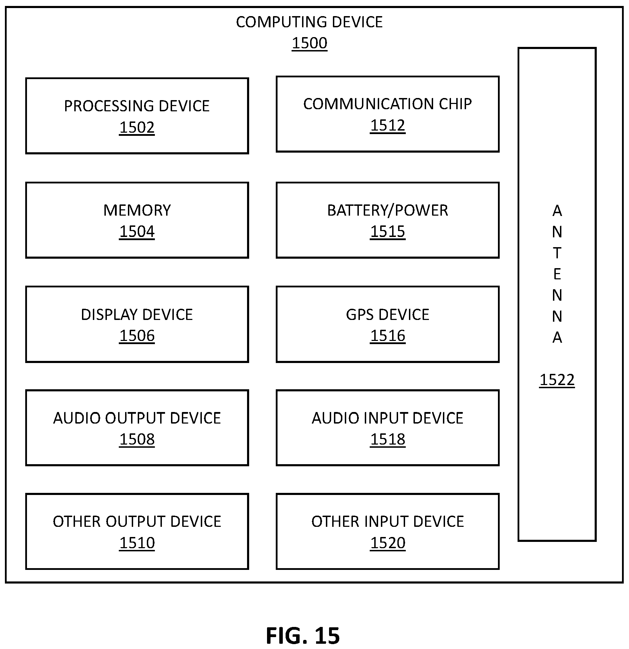

FIG. 15 is a block diagram of an example computing device 1500, in accordance with various embodiments. In some embodiments, the computing device 1500 can be used as the DNN system 1400 in FIG. 14. A number of components are illustrated in FIG. 15 as included in the computing device 1500, but any one or more of these components may be omitted or duplicated, as suitable for the application. In some embodiments, some or all of the components included in the computing device 1500 may be attached to one or more motherboards. In some embodiments, some or all of these components are fabricated onto a single system on a chip (SoC) die. Additionally, in various embodiments, the computing device 1500 may not include one or more of the components illustrated in FIG. 15, but the computing device 1500 may include interface circuitry for coupling to the one or more components. For example, the computing device 1500 may not include a display device 1506, but may include display device interface circuitry (e.g., a connector and driver circuitry) to which a display device 1506 may be coupled. In another set of examples, the computing device 1500 may not include an audio input device 1518 or an audio output device 1508, but may include audio input or output device interface circuitry (e.g., connectors and supporting circuitry) to which an audio input device 1518 or audio output device 1508 may be coupled.

The computing device 1500 may include a processing device 1502 (e.g., one or more processing devices). The processing device 1502 processes electronic data from registers and/or memory to transform that electronic data into other electronic data that may be stored in registers and/or memory. The computing device 1500 may include a memory 1504, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 1504 may include memory that shares a die with the processing device 1502. In some embodiments, the memory 1504 includes one or more non-transitory computer-readable media storing instructions executable to perform operations for deep learning. The instructions stored in the one or more non-transitory computer-readable media may be executed by the processing device 2402.

In some embodiments, the computing device 1500 may include a communication chip 1512 (e.g., one or more communication chips). For example, the communication chip 1512 may be configured for managing wireless communications for the transfer of data to and from the computing device 1500. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 1512 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 1512 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 1512 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 1512 may operate in accordance with CDMA, Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 1512 may operate in accordance with other wireless protocols in other embodiments. The computing device 1500 may include an antenna 1522 to facilitate wireless communications and/or to receive other wireless communications (such as AM or FM radio transmissions).

In some embodiments, the communication chip 1512 may manage wired communications, such as electrical, optical, or any other suitable communication protocols (e.g., the Ethernet). As noted above, the communication chip 1512 may include multiple communication chips. For instance, a first communication chip 1512 may be dedicated to shorter-range wireless communications such as Wi-Fi or Bluetooth, and a second communication chip 1512 may be dedicated to longer-range wireless communications such as global positioning system (GPS), EDGE, GPRS, CDMA, WiMAX, LTE, EV-DO, or others. In some embodiments, a first communication chip 1512 may be dedicated to wireless communications, and a second communication chip 1512 may be dedicated to wired communications.

The computing device 1500 may include battery/power circuitry 1514. The battery/power circuitry 1514 may include one or more energy storage devices (e.g., batteries or capacitors) and/or circuitry for coupling components of the computing device 1500 to an energy source separate from the computing device 1500 (e.g., AC line power).

The computing device 1500 may include a display device 1506 (or corresponding interface circuitry, as discussed above). The display device 1506 may include any visual indicators, such as a heads-up display, a computer monitor, a projector, a touchscreen display, a liquid crystal display (LCD), a light-emitting diode display, or a flat panel display, for example.

The computing device 1500 may include an audio output device 1508 (or corresponding interface circuitry, as discussed above). The audio output device 1508 may include any device that generates an audible indicator, such as speakers, headsets, or earbuds, for example.

The computing device 1500 may include an audio input device 1518 (or corresponding interface circuitry, as discussed above). The audio input device 1518 may include any device that generates a signal representative of a sound, such as microphones, microphone arrays, or digital instruments (e.g., instruments having a musical instrument digital interface (MIDI) output).

The computing device 1500 may include a GPS device 1516 (or corresponding interface circuitry, as discussed above). The GPS device 1516 may be in communication with a satellite-based system and may receive a location of the computing device 1500, as known in the art.

The computing device 1500 may include an other output device 1510 (or corresponding interface circuitry, as discussed above). Examples of the other output device 1510 may include an audio codec, a video codec, a printer, a wired or wireless transmitter for providing information to other devices, or an additional storage device.

The computing device 1500 may include an other input device 1520 (or corresponding interface circuitry, as discussed above). Examples of the other input device 1520 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (register filelD) reader.

The computing device 1500 may have any desired form factor, such as a handheld or mobile computer system (e.g., a cell phone, a smart phone, a mobile internet device, a music player, a tablet computer, a laptop computer, a netbook computer, an ultrabook computer, a PDA, an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 1500 may be any other electronic device that processes data.

### Select Examples

The following paragraphs provide various examples of the embodiments disclosed herein.

Example 1 provides a method for deep learning, the method including generating a combined sparsity vector with an activation sparsity vector with a weight sparsity vector, where the activation sparsity vector indicates positions of non-zero valued activations in an activation context of a convolution, the weight sparsity vector indicates positions of non-zero valued weights in a weight context of the convolution, and the combined sparsity vector includes a zero valued bit and a non-zero valued bit; receiving the non-zero valued activations and the non-zero valued weights from a first memory; determining the position of a non-zero valued bit in the combined sparsity vector; determining an address for the non-zero valued activation and for the non-zero valued weight based on the position of the non-zero valued bit in the combined sparsity vector; and writing the non-zero valued activation to the address in a second memory; and writing the non-zero valued weight to the address in a third memory.

Example 2 provides the method of example 1, where the non-zero valued activations or the non-zero valued weights were stored at consecutive addresses in the first memory, and the consecutive addresses have been changed to inconsecutive addresses in a sequence of addresses.

Example 3 provides the method of example 2, where the consecutive addresses have been changed to the inconsecutive addresses in the sequence of addresses based on the activation sparsity vector or the weight sparsity vector, and positions of the inconsecutive addresses in the sequence of addresses match positions of non-zero valued bits in the activation sparsity vector or the weight sparsity vector.

Example 4 provides the method of example 2 or 3, where a number of addresses in the sequence of addresses equals a number of activations in the activation context, and one or more addresses in the sequence of addresses do not store any data.

Example 5 provides the method of any of the preceding examples, where the convolution is performed by a compute block, the first memory is outside the compute block, and the second memory and the third memory are inside the compute block.

Example 6 provides the method of any of the preceding examples, where the activation context and the weight context are used by a PE associated with the second memory and the third memory to perform an MAC operation.

Example 7 provides the method of example 6, where the PE includes a first multiplier, a second multiplier, and an accumulator, the first multiplier is to perform a first multiplication operation on the non-zero valued activation and the non-zero valued weight, the second multiplier is to perform a second multiplication operation on another non-zero valued activation in the activation context and another non-zero valued weight in the weight context; and the accumulator is to accumulate a result of the first multiplication operation and a result of the second multiplication operation.

Example 8 provides the method of any of the preceding examples, where determining the position of the non-zero valued bit in the combined sparsity vector includes identifying the non-zero valued bit within a subset of the combined sparsity vector.

Example 9 provides the method of any of the preceding examples, where determining the position of the non-zero valued bit in the combined sparsity vector includes generating a vector based on the combined sparsity vector and a mask vector; generating a one-hot vector based on the vector, where the one-hot vector includes one non-zero valued bit and a plurality of zero valued bits; and determining the position based on the one-hot vector.

Example 10 provides the method of example 9, further includes determining a sequence of addresses in the second memory for the non-zero valued activations in the activation context, where determining the position based on the one-hot vector includes determining the position based on the one-hot vector and gray codes so that two adjacent addresses in the sequence are different by one bit.

Example 11 provides a compute block, the compute block associated with a first memory and including a PE configured to perform an MAC operation on an activation context and a weight context; a second memory for storing a non-zero valued activation in the activation context; a third memory for storing a non-zero valued weight in the weight context; and a sparsity decoder configured to generate a combined sparsity vector with an activation sparsity vector with a weight sparsity vector, where the activation sparsity vector indicates positions of non-zero valued activations in the activation context, the weight sparsity vector indicates positions of non-zero valued weights in the weight context, and the combined sparsity vector includes a zero valued bit and a non-zero valued bit; receive the non-zero valued activations and the non-zero valued weights from the first memory; determine the position of a non-zero valued bit in the combined sparsity vector; determine an address for storing the non-zero valued activation in the second memory and for storing the non-zero valued weight in the third memory.

Example 12 provides the compute block of example 11, where the non-zero valued activations or the non-zero valued weights were stored at consecutive addresses in the first memory, and the consecutive addresses have been changed to inconsecutive addresses in a sequence of addresses.

Example 13 provides the compute block of example 12, where the consecutive addresses have been changed to the inconsecutive addresses in the sequence of addresses based on the activation sparsity vector or the weight sparsity vector, and positions of the inconsecutive addresses in the sequence of addresses match positions of non-zero valued bits in the activation sparsity vector or the weight sparsity vector.

Example 14 provides the compute block of example 12 or 13, where a number of addresses in the sequence of addresses equals a number of activations in the activation context, and one or more addresses in the sequence of addresses do not store any data.

Example 15 provides the compute block of any one of examples 11-14, where the first memory is outside the compute block.

Example 16 provides the compute block of any one of examples 11-15, where the PE includes a first multiplier, a second multiplier, and an accumulator, the first multiplier is to perform a first multiplication operation on the non-zero valued activation and the non-zero valued weight, the second multiplier is to perform a second multiplication operation on another non-zero valued activation in the activation context and another non-zero valued weight in the weight context; and the accumulator is to accumulate a result of the first multiplication operation and a result of the second multiplication operation.

Example 17 provides the compute block of example 16, where the compute block further includes a fourth memory for storing the another non-zero valued activation in the activation context and a fifth memory for storing the another non-zero valued weight in the weight context.

Example 18 provides the compute block of any one of examples 11-17, where the sparsity decoder is configured to determine the position of the non-zero valued bit in the combined sparsity vector by identifying the non-zero valued bit within a subset of the combined sparsity vector.

Example 19 provides the compute block of example 18, where the sparsity decoder is configured to determine the position of the non-zero valued bit in the combined sparsity vector by generating a vector based on the combined sparsity vector and a mask vector; generating a one-hot vector based on the vector, where the one-hot vector includes one non-zero valued bit and a plurality of zero valued bits; and determining the position based on the one-hot vector.

Example 20 provides the compute block of example 19, where the sparsity decoder is further configured to determine a sequence of addresses in the second memory for the non-zero valued activations in the activation context, where determining the position based on the one-hot vector includes determining the position based on the one-hot vector and gray codes so that two adjacent addresses in the sequence are different by one bit.

Example 21 provides one or more non-transitory computer-readable media storing instructions executable to perform operations for training a target neural network, the operations including generating a combined sparsity vector with an activation sparsity vector with a weight sparsity vector, where the activation sparsity vector indicates positions of non-zero valued activations in an activation context of a convolution, the weight sparsity vector indicates positions of non-zero valued weights in a weight context of the convolution, and the combined sparsity vector includes a zero valued bit and a non-zero valued bit; receiving the non-zero valued activations and the non-zero valued weights from a first memory; determining the position of a non-zero valued bit in the combined sparsity vector; determining an address for the non-zero valued activation and for the non-zero valued weight based on the position of the non-zero valued bit in the combined sparsity vector; and writing the non-zero valued activation to the address in a second memory; and writing the non-zero valued weight to the address in a third memory.

Example 22 provides the one or more non-transitory computer-readable media of example 21, where the non-zero valued activations or the non-zero valued weights were stored at consecutive addresses in the first memory, and the consecutive addresses have been changed to inconsecutive addresses in a sequence of addresses.

Example 23 provides the one or more non-transitory computer-readable media of example 21 or 22, where the convolution is performed by a compute block, the first memory is outside the compute block, and the second memory and the third memory are inside the compute block.

Example 24 provides the one or more non-transitory computer-readable media of any one of examples 21-23, where determining the position of the non-zero valued bit in the combined sparsity vector includes identifying the non-zero valued bit within a subset of the combined sparsity vector.

Example 25 provides the one or more non-transitory computer-readable media of any one of examples 21-24, where determining the position of the non-zero valued bit in the combined sparsity vector includes generating a vector based on the combined sparsity vector and a mask vector; generating a one-hot vector based on the vector, where the one-hot vector includes one non-zero valued bit and a plurality of zero valued bits; and determining the position based on the one-hot vector.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. A method for deep learning, the method comprising:
generating a combined sparsity vector with an activation sparsity vector with a weight sparsity vector, wherein the activation sparsity vector indicates positions of non-zero valued activations in an activation context of a convolution, the weight sparsity vector indicates positions of non-zero valued weights in a weight context of the convolution, and the combined sparsity vector comprises a zero valued bit and a non-zero valued bit;
receiving the non-zero valued activations and the non-zero valued weights from a first memory;
determining a position of a non-zero valued bit in the combined sparsity vector;
determining an address for a non-zero valued activation and for a non-zero valued weight based on the position of the non-zero valued bit in the combined sparsity vector; and
writing the non-zero valued activation to the address in a second memory; and
writing the non-zero valued weight to the address in a third memory.

2. The method of claim 1, wherein the non-zero valued activations or the non-zero valued weights were stored at consecutive addresses in the first memory, and the consecutive addresses have been changed to inconsecutive addresses in a sequence of addresses.

3. The method of claim 2, wherein:
the consecutive addresses have been changed to the inconsecutive addresses in the sequence of addresses based on the activation sparsity vector or the weight sparsity vector, and positions of the inconsecutive addresses in the sequence of addresses match positions of non-zero valued bits in the activation sparsity vector or the weight sparsity vector; or
a number of addresses in the sequence of addresses equals a number of activations in the activation context, and one or more addresses in the sequence of addresses do not store any data.

4. The method of any of the preceding claims, wherein the convolution is performed by a compute block, the first memory is outside the compute block, and the second memory and the third memory are inside the compute block.

5. The method of any of the preceding claims, wherein:
the activation context and the weight context are used by a processing element associated with the second memory and the third memory to perform a multiply-accumulate (MAC) operation,
the processing element comprises a first multiplier, a second multiplier, and an accumulator,
the first multiplier is to perform a first multiplication operation on the non-zero valued activation and the non-zero valued weight,
the second multiplier is to perform a second multiplication operation on another non-zero valued activation in the activation context and another non-zero valued weight in the weight context; and
the accumulator is to accumulate a result of the first multiplication operation and a result of the second multiplication operation.

6. The method of any of the preceding claims, wherein determining the position of the non-zero valued bit in the combined sparsity vector comprises:
identifying the non-zero valued bit within a subset of the combined sparsity vector; or
generating a vector based on the combined sparsity vector and a mask vector, generating a one-hot vector based on the vector, wherein the one-hot vector comprises one non-zero valued bit and a plurality of zero valued bits, and determining the position based on the one-hot vector.

7. The method of claim 6, further comprises:
determining a sequence of addresses in the second memory for the non-zero valued activations in the activation context,
wherein determining the position based on the one-hot vector comprises determining the position based on the one-hot vector and gray codes so that two adjacent addresses in the sequence are different by one bit.

8. A compute block, the compute block associated with a first memory and comprising:
a processing element configured to perform a multiply-accumulate (MAC) operation on an activation context and a weight context;
a second memory for storing a non-zero valued activation in the activation context;
a third memory for storing a non-zero valued weight in the weight context; and
a sparsity decoder configured to:
generate a combined sparsity vector with an activation sparsity vector with a weight sparsity vector, wherein the activation sparsity vector indicates positions of non-zero valued activations in the activation context, the weight sparsity vector indicates positions of non-zero valued weights in the weight context, and the combined sparsity vector comprises a zero valued bit and a non-zero valued bit;
receive the non-zero valued activations and the non-zero valued weights from the first memory;
determine a position of a non-zero valued bit in the combined sparsity vector;
determine an address for storing the non-zero valued activation in the second memory and for storing the non-zero valued weight in the third memory.

9. The compute block of claim 8, wherein the non-zero valued activations or the non-zero valued weights were stored at consecutive addresses in the first memory, and the consecutive addresses have been changed to inconsecutive addresses in a sequence of addresses.

10. The compute block of claim 9, wherein:
the consecutive addresses have been changed to the inconsecutive addresses in the sequence of addresses based on the activation sparsity vector or the weight sparsity vector, and positions of the inconsecutive addresses in the sequence of addresses match positions of non-zero valued bits in the activation sparsity vector or the weight sparsity vector; or
a number of addresses in the sequence of addresses equals a number of activations in the activation context, and one or more addresses in the sequence of addresses do not store any data.

11. The compute block of any one of claims 8-10, wherein the first memory is outside the compute block.

12. The compute block of any one of claims 8-11, wherein:
the processing element comprises a first multiplier, a second multiplier, and an accumulator,
the first multiplier is to perform a first multiplication operation on the non-zero valued activation and the non-zero valued weight,
the second multiplier is to perform a second multiplication operation on another non-zero valued activation in the activation context and another non-zero valued weight in the weight context,
the accumulator is to accumulate a result of the first multiplication operation and a result of the second multiplication operation, and
the compute block further comprises a fourth memory for storing the another non-zero valued activation in the activation context and a fifth memory for storing the another non-zero valued weight in the weight context.

13. The compute block of any one of claims 8-12, wherein the sparsity decoder is configured to determine the position of the non-zero valued bit in the combined sparsity vector by:
identifying the non-zero valued bit within a subset of the combined sparsity vector; or
generating a vector based on the combined sparsity vector and a mask vector, generating a one-hot vector based on the vector, wherein the one-hot vector comprises one non-zero valued bit and a plurality of zero valued bits, and determining the position based on the one-hot vector.

14. The compute block of claim 13, wherein the sparsity decoder is further configured to determine a sequence of addresses in the second memory for the non-zero valued activations in the activation context, wherein determining the position based on the one-hot vector comprises determining the position based on the one-hot vector and gray codes so that two adjacent addresses in the sequence are different by one bit.

15. One or more non-transitory computer-readable media storing instructions executable to perform the method of any one of claims 1-7.
